# EUROPEAN PATENT SPECIFICATION

(11) **EP 4 618 516 B1**
(45) Date of publication and mention of the grant of the patent: **08.07.2026**
(21) Application number: 25163583.5
(22) Date of filing: 13.03.2025
(51) Int. Cl.: H04L 67/306

(54) **DATA INTERACTION METHOD AND APPARATUS FOR PROGRAMMABLE LOGIC CONTROLLER, AND ELECTRONIC DEVICE THEREOF**
DATENINTERAKTIONSVERFAHREN UND -VORRICHTUNG FÜR EINE SPEICHERPROGRAMMIERBARE STEUERUNG UND ELEKTRONISCHE VORRICHTUNG DAFÜR
PROCÉDÉ ET APPAREIL D'INTERACTION DE DONNÉES POUR CONTRÔLEUR LOGIQUE PROGRAMMABLE, ET DISPOSITIF ÉLECTRONIQUE ASSOCIÉ

(30) Priority: 14.03.2024 CN 202410294032
(43) Date of publication of application: 17.09.2025
(73) Proprietor: Shenzhen Ai Link Network Co., Ltd., Shenzhen Guangdong (CN)
(72) Inventor: Yifan, Yu, Shenzhen (CN); Lei, Shi, Shenzhen (CN)
(74) Representative: JWP Patent & Trademark Attorneys

(56) References cited:
- CN-A- 111 107 673

## Description

### TECHNICAL FIELD

The present disclosure relates to the technical field of communications, and in particular, relates to a data interaction method and apparatus for a programmable logic controller, and an electronic device thereof.

### BACKGROUND

Creating applications by connecting various functional blocks is a graphical industrial system development approach, commonly referred to as industrial configuration. Using an industrial configuration system, users accomplish required software functionalities by a simple, "building block" approach, without the need to write complex computer programs.

In related arts, industrial configuration software mainly creates and edits applications by graphical means. However, such industrial configuration software lacks the ability to interact with the control plane of 5G (the fifth-generation mobile communication technology) networks. As a result, with respect to the software developed using the industrial configuration software, a UE fails to perform data exchange based on pre-configured quality requirements.

Document CN 111107673 A discloses a wireless communication method and a wireless communication device. The wireless communication method includes: the first access and mobility management function network element acquires a connection identifier, the connection identifier is used for indicating that the session is kept in an activated state, and the first access and mobility management function network element forbids to deactivate the session according to the connection identifier.

### SUMMARY

The present disclosure is intended to provide a data interaction method and apparatus for a programmable logic controller, and an electronic device thereof to solve the technical problem in the related art.

To achieve the above objective, the present disclosure employs the following technical solutions.

In a first aspect, some embodiments of the present disclosure provide a data interaction method for a programmable logic controller, applicable to a server. The method includes:
generating a parsed tag by parsing a configuration file of a target application, wherein the target application is an application graphically developed using industrial configuration software;
acquiring subscription data of a user equipment (UE) from a user data management (UDM) network element based on an internet protocol (IP) address of the UE in the parsed tag;
determining whether pre-configured first quality requirement information of the UE is consistent with second quality requirement information in the subscription data of the UE; and
sending a modification request for the subscription data of the UE to the UDM network element in a case that the first quality requirement information of the UE is inconsistent with the second quality requirement information of the UE, such that the UDM network element modifies the second quality requirement information of the UE based on the first quality requirement information of the UE, and modifies a protocol data unit (PDU) session of the UE using a session management function (SMF) network element, whereby the UE performs data interaction for the target application based on the first quality requirement information.

In some embodiments, the acquiring the subscription data of the UE from the UDM network element based on the IP address of the UE in the parsed tag includes:
sending a query request for identification information of the UE to the UDM network element based on the IP address of the UE, such that the UDM network element searches for identification information of the UE based on the IP address of the UE;
writing the identification information of the UE sent from the UDM into the parsed tag;
sending a query request for the subscription data of the UE to the UDM network element based on the identification information of the UE in the parsed tag; and
receiving the subscription data of the UE from the UDM network element.

In some embodiments, the determining whether the pre-configured first quality requirement information of the UE is consistent with the second quality requirement information in the subscription data of the UE in the UDM network element includes:
determining whether identification information of a first network slice and identification information of a first quality requirement in the first quality requirement information of the UE are respectively consistent with identification information of a second network slice and identification information of a second quality requirement in the second quality requirement information of the UE;
determining the first quality requirement information of the UE is consistent with the second quality requirement information of the UE in a case that the identification information of the first network slice is consistent with the identification information of the second network slice, and the identification information of the first quality requirement is consistent with the identification information of the second quality requirement; or
determining the first quality requirement information of the UE is inconsistent with the second quality requirement information of the UE in a case that the identification information of the first network slice is inconsistent with the identification information of the second network slice and/or the identification information of the first quality requirement is inconsistent with the identification information of the second quality requirement.

In some embodiments, the UE includes a source UE; and the acquiring the subscription data of the UE from the UDM network element based on the IP address of the UE in the parsed tag includes:
acquiring subscription data of the source UE from the UDM network element based on an IP address of the source UE in the parsed tag;
the determining whether the pre-configured first quality requirement information of the UE is consistent with the second quality requirement information in the subscription data of the UE includes:
   determining whether first quality requirement information of the source UE is consistent with second quality requirement information in the subscription data of the source UE; and
   the sending the modification request for the subscription data of the UE to the UDM network element in a case that the first quality requirement information of the UE is inconsistent with the second quality requirement information of the UE includes:
      sending a modification request for the subscription data of the source UE to the UDM network element in a case that the first quality requirement information of the source UE is inconsistent with the second quality requirement information of the source UE.

In some embodiments, the UE includes a destination UE; the acquiring the subscription data of the UE from the UDM network element based on the IP address of the UE in the parsed tag includes:
acquiring subscription data of the destination UE from the UDM network element based on an IP address of the destination UE in the parsed tag;
the determining whether the pre-configured first quality requirement information of the UE is consistent with the second quality requirement information in the subscription data of the UE includes:
   determining whether first quality requirement information of the destination UE is consistent with second quality requirement information in the subscription data of the destination UE; and
   the sending the modification request for the subscription data of the UE to the UDM network element in a case that the first quality requirement information of the UE is inconsistent with the second quality requirement information of the UE includes:
      sending a modification request for the subscription data of the destination UE to the UDM network element in a case that the first quality requirement information of the destination UE is inconsistent with the second quality requirement information of the destination UE.

In some embodiments, prior to determining whether the pre-configured first quality requirement information of the UE is consistent with the second quality requirement information in the subscription data of the UE, the method further includes:
determining the first quality requirement information of the UE from the parsed tag; or
retrieving the first quality requirement information of the UE from a predetermined database based on a field corresponding to an information channel in the parsed tag.

In a second aspect, some embodiments of the present disclosure further provide a data interaction method for a programmable logic controller, applicable to a UDM network element. The method includes:
receiving a modification request for subscription data of a UE from a server, wherein the modification request is sent by the server in a case that the server determines pre-configured first quality requirement information is inconsistent with second quality requirement information in the subscription data of the UE, and the subscription data of the UE is acquired by the server from the UDM network element based on an IP address of the UE in a parsed tag, the parsed tag is generated by the server by parsing a configuration file of a target application, wherein the target application is an application graphically developed using industrial configuration software;
modifying the second quality requirement information in the subscription data of the UE based on the first quality requirement information of the UE carried in the modification request; and
modifying a PDU session of the UE using an SMF network element, such that the UE performs data interaction for the target application based on the first quality requirement information.

In a third aspect, some embodiments of the present disclosure further provide a data interaction apparatus for a programmable logic controller, applicable to a server. The apparatus includes: a generating module, an acquiring module, a determining module, and a sending module.

The generating module is configured to generate a parsed tag by parsing a configuration file of a target application, wherein the target application is an application graphically developed using industrial configuration software.

The acquiring module is configured to acquire subscription data of a UE from a UDM network element based on an IP address of the UE in the parsed tag.

The determining module is configured to determine whether pre-configured first quality requirement information of the UE is consistent with second quality requirement information in the subscription data of the UE.

The sending module is configured to send a modification request for the subscription data of the UE to the UDM network element in a case that the first quality requirement information of the UE is inconsistent with the second quality requirement information of the UE, such that the UDM network element modifies the second quality requirement information of the UE based on the first quality requirement information of the UE, and modifies a PDU session of the UE using an SMF network element, whereby the UE performs data interaction for the target application based on the first quality requirement information.

In a fourth aspect, some embodiments of the present disclosure further provide a data interaction apparatus for a programmable logic controller, applicable to a UDM network element. The apparatus includes: a receiving module and a modifying module.

The receiving module is configured to receive a modification request for subscription data of a UE from a server, wherein the modification request is sent by the server in a case that the server determines pre-configured first quality requirement information is inconsistent with second quality requirement information in the subscription data of the UE, and the subscription data of the UE is acquired by the server from the UDM network element based on an IP address of the UE in a parsed tag, and the parsed tag is generated by the server by parsing a configuration file of a target application, wherein the target application is an application graphically developed using industrial configuration software;
The modifying module is configured to modify the second quality requirement information in the subscription data of the UE based on the first quality requirement information of the UE carried in the modification request, and modify a PDU session of the UE using an SMF network element, such that the UE performs data interaction for the target application based on the first quality requirement information.

In a fifth aspect, some embodiments of the present disclosure further provide an electronic device. The electronic device includes a memory and a processor storing one or more computer programs runnable by the processor, wherein the process is configured to load and run the one or more computer programs to cause the electronic device to perform the method according to the first aspect or perform the method according to the second aspect.

The present disclosure provides a data interaction method for a programmable logic controller, and the method includes: generating a parsed tag by parsing a configuration file of a target application, wherein the target application is an application graphically developed using industrial configuration software; acquiring subscription data of a UE from a UDM network element based on an IP address of the UE in the parsed tag; determining whether pre-configured first quality requirement information of the UE is consistent with second quality requirement information in the subscription data of the UE; and sending a modification request for the subscription data of the UE to the UDM network element in a case that the first quality requirement information of the UE is inconsistent with the second quality requirement information of the UE, such that the UDM network element modifies the second quality requirement information of the UE based on the first quality requirement information of the UE, and modifies a PDU session of the UE using an SMF network element, whereby the UE performs data interaction for the target application based on the first quality requirement information. In a case that the pre-configured first quality requirement information of the UE is inconsistent with the second quality requirement information in the subscription data of the UE in the UDM network element, the second quality requirement information in the UDM network element is modified, and the PDU session of the UE is modified. In this way, when the target application developed using industrial configuration software is running on the UE, the UE may perform data interaction with the target application based on pre-configured quality requirements.

### BRIEF DESCRIPTION OF DRAWINGS

For clearer descriptions of the technical solutions according to the embodiments of the present disclosure, drawings that are to be referred for description of the embodiments are briefly described hereinafter. Apparently, the drawings described hereinafter merely illustrate some embodiments of the present disclosure. Persons of ordinary skill in the art may also derive other drawings based on the drawings described herein without any creative effort.
FIG. 1 is a schematic structural diagram of a data interaction system according to some embodiments of the present disclosure;
FIG. 2 is a schematic flowchart of a data interaction method for a programmable logic controller according to some embodiments of the present disclosure;
FIG. 3 is a schematic flowchart of a data interaction method for a programmable logic controller according to some embodiments of the present disclosure;
FIG. 4 is a schematic flowchart of a data interaction method for a programmable logic controller according to some embodiments of the present disclosure;
FIG. 5 is a schematic flowchart of a data interaction method for a programmable logic controller according to some embodiments of the present disclosure;
FIG. 6 is a schematic flowchart of a data interaction method for a programmable logic controller according to some embodiments of the present disclosure;
FIG. 7 is a schematic structural diagram of a data interaction apparatus for a programmable logic controller according to some embodiments of the present disclosure;
FIG. 8 is a schematic structural diagram of a data interaction apparatus for a programmable logic controller according to some embodiments of the present disclosure; and
FIG. 9 is a schematic structural diagram of an electronic device according to some embodiments of the present disclosure.

### DESCRIPTION OF EMBODIMENTS

For clearer descriptions of the objectives, technical solutions and advantages of the embodiments of the present disclosure clearer, the technical solutions according to the embodiments of the present disclosure are clearly and thoroughly described with reference to the accompanying drawings of the embodiments of the present disclosure. The described embodiments are merely exemplary ones, but are not all the embodiments of the present disclosure.

Therefore, the detail descriptions of the embodiments of the present disclosure illustrated with reference to the accompanying drawings are not intended to limit the scope of the projection of the present disclosure, but are intended to merely illustrate some optional and exemplary embodiments of the present disclosure. All other embodiments obtained by a person of ordinary skill in the art based on the embodiments of the present disclosure without creative efforts shall fall within the protection scope of the present disclosure.

In the description of the present disclosure, it should be understood that the terms "upper," "lower," and the like indicate orientations and positional relationships based on the illustrations in the accompanying drawings or indicate customary orientations or positional relationships when the product according to the present disclosure is in use. These terms are merely for ease and brevity of the description, instead of indicating or implying that the devices or elements shall have a particular orientation and shall be structured and operated based on the particular orientation. Accordingly, these terms shall not be construed as limiting the present disclosure.

It should be noted that the terms such as "first," "second," and the like in the specifications, claims and the accompanying drawings of the present disclosure are intended to distinguish different objects but are not intended to define a specific order or a definite time sequence. It should be understood that such used data may be exchanged in any suitable scenario, such that the embodiments of the present disclosure described herein may be practiced in other time sequence in addition to that illustrated in the drawings or described herein in the text. Additionally, the terms "comprise," "include," "have," and any variations thereof are intended to denote a covering but non-exclusive meaning. For example, a process, a method, a system, a product or a device that includes a series of steps or units are not necessarily limited to those implicitly listed steps or units, but is otherwise a process, a method, a system, a product or a device that includes other inherited steps or units not implicitly disclosed.

It should be noted that in cases of no conflict, the features in the embodiments of the present disclosure may be combined together.

First, the terms involved in the embodiments of the present disclosure are introduced hereinafter.

5G refers to the 5th generation mobile communication technology.

UDM: refers to unified data management, including functions of user identification management, policy management, user configuration management, or the like.

SMF: refers to a session management function, which is responsible for managing sessions of users.

NEF: refers to a network equipment function, which is a component of a network and provides network services.

UE: refers to a user equipment, which may be a mobile phone, tablet computer, a laptop computer, or other devices.

PDU session: refers a protocol data unit session, which is a process of communication between a user terminal and a data network, and establishes a data transmission channel between the user terminal and the data network.

Nudm interface: refers to a service-oriented interface provided by the UDM.

UPF: refers to a user plane function, which is mainly responsible for routing and forwarding user plane data packets in a 5G core network.

RAN: refers to radio access network, which is a part of the mobile communication system that implements the radio access technology. NG-RAN refers to the radio access network in 5G systems.

AMF: refers to access and mobility management function, which is responsible for registration, connection management, reachability, and mobility management. The AMF provides session management message transmission channels for the UE and session management function (SMF), offers authentication and authorization during user access, and serves as a control plane access point between a terminal and a core network.

UPF: refers to user plane function, which is a critical component of the 5G core network architecture responsible for routing and forwarding user plane data packets of a 5G core network.

NSSF: refers to network slice selection function, which is responsible for selection of network slices.

NRF: refers to NF repository function, which is a new functionality that provides registration and discovery services, enabling network functions to discover each other and communicate over application programming interfaces (APIs).

PCF: refers to policy control function, which is one of network functions in the 5G core network. The PFC manages network behavior using a unified policy framework, and works with the unified data repository (UDR) to execute relevant policies based on user information.

AF: refers to application function, which provides various services on an application layer.

AUSF: refers to authentication server function.

SUPI: refers to subscription permanent identifier.

S-NSSAI: refers to single network slice selection assistance information.

The IEC 61499 standard is used for distributed industrial automation systems and defines a modeling language that allows for the modeling of an entire control system, even when the system is composed of smaller components, such as individual programmable logic controllers (PLCs). Specific control functions are implemented in the form of functional blocks (FBs). FBs are used for functionality encapsulation, and by connecting these FBs, applications are created (similar to graphical programming methods like LabVIEW). This graphical approach to industrial system development is commonly referred to as industrial configuration. Using an industrial configuration system, users accomplish required software functionalities by a simple, "building block" approach, without the need to write complex computer programs.

The system defined by IEC 61499 is composed of a plurality of physical devices and networks connecting these physical devices. Thus, a communication network is formed for the devices. The communication link may be of different types and may be divided into a plurality of network segments. For example, Ethernet, Wi-Fi, 5G, or the like may be used.

Controllers that support the IEC 61499 standard are typically computing devices that use general-purpose processors and run the IEC 61499 runtime. The IEC 61499 runtime is a relatively complex low-level software that needs to support multitasking and various network protocols.

IEC 61499 defines a device model for describing devices that support the execution of IEC 61499 function block networks. A device is composed of a communication interface, a process interface, device management, and one or more resources. The communication interface provides communication services for the device. The process interface provides services for accessing the sensors/actuators required for controlling the process. The device also has management and monitoring functions, and is capable of creating and deleting resources, loading function block networks, and reading events and data from each function block object.

IEC 61499 defines a resource model. In the IEC 61499 standard, a resource is an independent execution unit, and each resource is capable of running a complete or partial function block network. A resource is an independent execution environment for the function block network. A resource may be a task, process, or thread of an operating system. Resources may run concurrently on a device and may be understood as "processes" that support the execution of function block networks. These resources are capable of passing various events and data, and based on event triggers, executing the algorithms of functional blocks. New events and data may be generated, and these events and data may be read and transmitted over communication service functional blocks.

IEC 61499 defines an application model. In the IEC 61499 standard, an application is a network of interconnected functional blocks, which may be understood as an application program.

The system constructed according to the IEC 61499 standard is not device-centered but application-centered. The application is directed towards a system-wide application, which may be understood as a unified application developed by a control system. Once developed, the application may be deployed in segments to different resources on various devices for running.

An IEC 61499 system model adopts a layered architecture. Application A runs on device 1, device 2, and device 3, application B runs on device 2, device 3, and device 4, and application C runs on device 1. For device 1, which includes resources X, Y, Z, management functions, communication interfaces and process interfaces, application A utilizes resources Y and Z on device 1, and application C utilizes resources X and Y on device 1. For resource X, service interface function block "a" communicates over the communication interface, and service interface function block "b" communicates over the process interface. Service interface function block "a" and service interface function block "b" are connected via an algorithm module, which transmits events and data.

IEC 61499 uses rich text syntax to represent the designed application description in textual form. An application is composed of a network of functional blocks, each having appropriate parameters and linked data and events. The textual representation used by IEC 61499 is typically in the form of an eXtensible Markup Language (XML) file. This file, along with the functional blocks, is loaded into the IEC 61499 runtime on the device. Subsequently, the device may operate based on the configuration specified by configuration software.

In related arts, industrial configuration software mainly creates and edits applications by graphical means. However, such industrial configuration software lacks the ability to interact with the control plane of 5G (the fifth-generation mobile communication technology) networks. As a result, the software developed using the industrial configuration software fails to perform data exchange based on pre-configured quality requirements.

To address the technical problems in the related art, some embodiments of the present disclosure provide a data interaction method for a programmable logic controller. A UE is a device corresponding to a parsesd tag, which essentially refers to the device in the configuration file of the target application. In a case that pre-configured first quality requirement information of the UE is inconsistent with second quality requirement information in subscription data of the UE in a UDM network element, the second quality requirement information in the UDM network element is modified, and a PDU session of the UE is modified. In this way, when the target application developed using industrial configuration software is running on the UE, the UE may perform data interaction with a target application based on the pre-configured quality requirements.

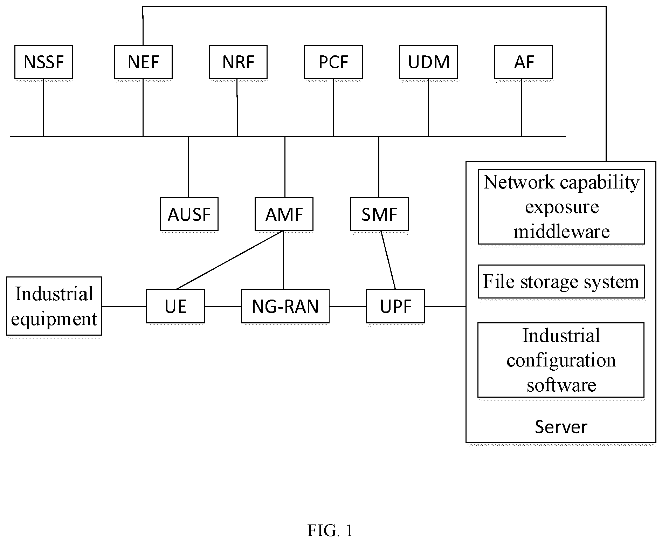

FIG. 1 is a schematic structural diagram of a data interaction system according to some embodiments of the present disclosure. As illustrated in FIG. 1, the data interaction system may include: an industrial equipment, a UE, a server, an SMF, a UPF, an NEF, a UDM, an AMF, and an NG-RAN. In this system, the NEF, the UDM, the SMF, and the AMF are connected to a communication bus. The server is communicably connected to the NEF and the UPF, and the SMF is communicably connected to the UPF. The industrial equipment is communicably connected to the AMF and the NG-RAN via the UE, and the NG-RAN is communicably connected to the UPF.

In the embodiments of the present disclosure, the server may run network capability exposure middleware, a file storage system, and industrial configuration software that are capable of communicating with each other. The network capability exposure middleware, the file storage system, and the industrial configuration software may either run on the same server or on different servers, and the embodiments of the present disclosure do not impose specific limitations on the arrangement.

Additionally, as illustrated in FIG. 1, the data interaction system may further include an NSSF, an NRF, a PCF, an AF, and an AUSF that are all connected to the communication bus.

Hereinafter, a data interaction method for a programmable logic controller according to the embodiments of the present disclosure is described using a server as the execution subject. Network capability exposure middleware, a file storage system, and industrial configuration software may run on the server.

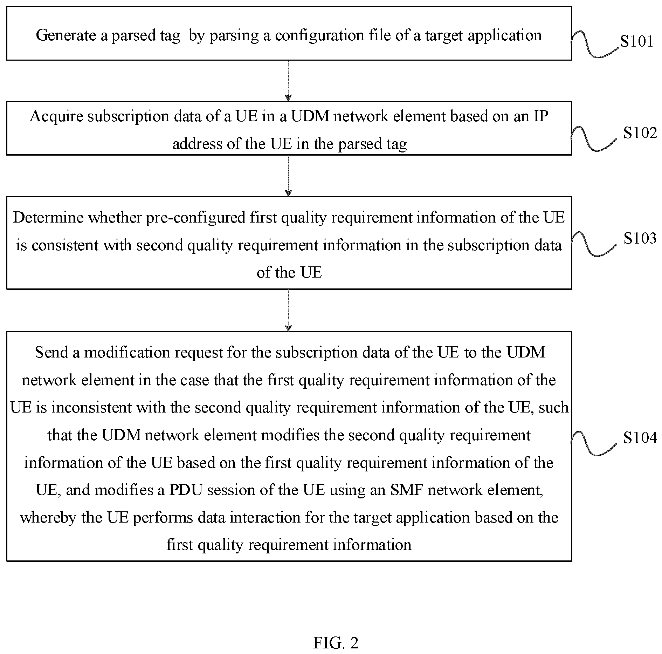

FIG. 2 is a schematic flowchart of a data interaction method for a programmable logic controller according to some embodiments of the present disclosure. As illustrated in FIG. 2, the method may include the following steps.

In S101, a parsed tag is generated by parsing a configuration file of a target application.

The target application is an application graphically developed using industrial configuration software. The configuration file of the target application may be an XML file related to an application configuration.

In some embodiments, the server graphically develops the target application using the industrial configuration software. Upon completion of the development of the target application, the configuration file of the target application is generated. This configuration file of the target application may be stored in the file storage system of the server. The network capability exposure middleware running on the server may continuously monitor the file storage system. In a case that the network capability exposure middleware detects that the XML file of the target application has been stored in the file storage system, the network capability exposure middleware may read the XML file and hence parse the SML file.

It should be noted that the parsed tag may include an IP address of the UE, and may further include the first quality requirement information. The first quality requirement information may also be stored in a predetermined database, which is not specifically limited in the embodiments of the present disclosure.

In the embodiments of the present disclosure, in a case that the network capability exposure middleware running on the server reads the XML file related to the application configuration, the network capability exposure middleware reads fields related to 5G network capability exposure. An XML file typically contains a plurality of tags. The network capability exposure middleware needs to read and analyze each tag one by one, and generates a parsed tag for each of the tags.

In S102, subscription data of a UE in a UDM network element is acquired based on an IP address of the UE in the parsed tag.

The subscription data of the UE includes second quality requirement information of the UE.

In some embodiments, identification information of the UE is acquired from the UDM network element based on the IP address of the UE contained in the parsed tag, and the identification information of the UE is then written into the parsed tag. In this case, the parsed tag further includes the identification information of the UE, and hence the subscription data of the UE may be acquired from the UDM network element based on the identification information of the UE.

In S103, whether pre-configured first quality requirement information of the UE is consistent with second quality requirement information in the subscription data of the UE is determined.

In some embodiments, the first quality requirement information of the UE may be pre-configured in the parsed tag or pre-configured in a predetermined database. The second quality requirement information in the subscription data of the UE may also be referred to as the second quality requirement information of the UE.

In the embodiments of the present disclosure, whether information items in the first quality requirement information of the UE are completely consistent with information items in the second quality requirement information of the UE respectively. In a case that these information items are completely consistent, the first quality requirement information of the UE is consistent with the second quality requirement information of the UE. In a case that at least one information item in the first quality requirement information is inconsistent with an information item in the second quality requirement information, the first quality requirement information of the UE is inconsistent with the second quality requirement information of the UE.

In S104, a modification request for the subscription data of the UE is sent to the UDM network element in a case that the first quality requirement information of the UE is inconsistent with the second quality requirement information of the UE, such that the UDM network element modifies the second quality requirement information of the UE based on the first quality requirement information of the UE, and modifies a PDU session of the UE using an SMF network element, whereby the UE performs data interaction for the target application based on the first quality requirement information.

The modification request for the subscription data of the UE may include the identification information of the UE and the first quality requirement information of the UE.

In some embodiments, in a case that the first quality requirement information of the UE is inconsistent with the second quality requirement information of the UE, the server sends the modification request for the subscription data of the UE to an NEF network element. The NEF network element receives the modification request for the subscription data of the UE, and forwards the modification request for the subscription data of the UE to the UDM network element. The UDM network element receives the modification request for the subscription data of the UE, searches for the second quality requirement information of the UE from local records thereof based on the identification information of the UE in the modification request, and then writes the first quality requirement information of the UE into the local records, thereby completing modification of the subscription data of the UE.

In the embodiments of the present disclosure, upon completion of the modification of the subscription data of the UE, the UDM network element sends a modification result to the NEF network element, and sends a modification event notification for the subscription data of the UE to the SMF network element via an Nudm interface. The NEF network element receives the modification result from the UDM network element, and returns the modification result to the network capability exposure middleware running on the server. The SMF network element receives the modification event notification for the subscription data of the UE from the UDM network element, and initiates a PDU session modification process to modify a PDU session for the UE specified in the modification event notification for the subscription data. In a case that the SMF network element completes the PDU session modification according to a procedure specified by 3rd Generation Partnership Project (3GPP), the UE specified in the event notification may perform data interaction for the target application based on the first quality requirement information.

Therefore, the embodiments of the present disclosure provide a data interaction method for a programmable logic controller. The method includes: generating a parsed tag by parsing a configuration file of a target application, wherein the target application is an application graphically developed using industrial configuration software; acquiring subscription data of a UE from a UDM network element based on an IP address of the UE in the parsed tag; determining whether pre-configured first quality requirement information of the UE is consistent with second quality requirement information in the subscription data of the UE; and sending a modification request for the subscription data of the UE to the UDM network element in a case that the first quality requirement information of the UE is inconsistent with the second quality requirement information of the UE, such that the UDM network element modifies the second quality requirement information of the UE based on the first quality requirement information of the UE, and modifies a PDU session of the UE using an SMF network element, whereby the UE performs data interaction for the target application based on the first quality requirement information. In a case that the pre-configured first quality requirement information of the UE is inconsistent with the second quality requirement information in the subscription data of the UE in the UDM network element, the second quality requirement information in the UDM network element is modified, and the PDU session of the UE is modified. In this way, when the target application developed using industrial configuration software is running on the UE, the UE may perform data interaction with the target application based on pre-configured quality requirements.

The process of parsing the configuration file of the target application and generating the parsed tag in step S101 mentioned above may also be implemented as follows.

In the embodiments of the present disclosure, the XML file related to the application configuration includes the following field information related to 5G network capability exposure: an IP address of a device where functional blocks are deployed, a communication port for event or data interaction between functional blocks, and a quality of service (QoS) requirement for event or data interaction. A specific format of the field information is: <Connection Source="xxx" Destination="xxx" QoS="xxx"/>.

"Connection" represents an information channel connecting two functional blocks, and is used for transmitting events/data. "Source" represents an information source. In a case that the functional blocks at both ends of the communication path are deployed on different devices, the "Connection Source" is represented as "IP address: port", wherein the IP address is an IP address of the device supporting running of the functional blocks, and the port is a communication port (port number) supporting information interaction. "Destination" represents an information destination. In a case that the functional blocks at both ends of the communication path are deployed on different devices, the "Destination" is represented as "IP address: port", wherein the IP address is an IP address of the device supporting the information destination, and the port is a communication port (port number) supporting information interaction. The device supporting running of the functional blocks of the information source may be referred to as a source UE, and the device supporting the running of the functional blocks of the information destination may be referred to as a destination UE.

It should be noted that "QoS" represents a quality requirement for a communication link between the devices. A specific format of the quality requirement is "rate: delay mode: delay budget". "Rate" refers to a transmission rate of information between the functional blocks on the information channel. "Delay mode" refers to an approach to test a delay of information interaction between the functional blocks on the information channel, and the delay mode may be classified into a jitter mode, a deterministic mode, and a cyclic mode. The deterministic mode is represented as "delay value@deterministic probability", wherein the specific meaning is that a probability that a link delay is lower than a specified delay value is not less than a specified deterministic probability. For example, "15ms@99.999%" means that the probability that the link delay is less than 15 ms is not less than 99.999%.

For the cyclic mode, it is represented as "cyclic time (CT) delay/standard time (ST) delay", wherein the specific meaning is that a source function block sends information to a destination function block at an interval of a CT delay, and the destination function block needs to receive at least one piece of information within a time window specified by the ST delay. For example, "8ms/24ms" means that the source function block sends information to the destination function block at an interval of 8 ms, and the destination function block needs to receive at least one piece of information within a 24 ms time window.

Additionally, the jitter mode is represented as "delay center value/delay jitter value", wherein the specific meaning that a midpoint of the link delay needs to be the delay center value, and deviations (to the left and right) of the link delay needs to be ensured not to exceed the delay jitter value. For example, "15 ms/1 ms" means that the link delay needs to be centered around 15 ms, with deviations on either side not exceeding 1 ms.

In some embodiments, in a case that the network capability exposure middleware running on the server reads the XML file related to the application configuration, the network capability exposure middleware reads a field related to 5G network capability exposure from the XML file related to the application configuration, that is, a tag in the form of <Connection Source="xxx" Destination="xxx" QoS="xxx"/>. The network capability exposure middleware running on the server, based on the read tag in the XML configuration file, generates a parsed tag, which is represented as: <Source IP address, Destination IP address, Source SUPI, Destination SUPI, S-NSSAI, 5QI>. In this case, the source SUPI and destination SUPI are empty.

The source IP address is an IP address in the source (information source), which is the IP address of the source UE; and the destination IP address is an IP address in the destination (information destination), which is the IP address of the destination UE. The source SUPI is a permanent identifier of a UE corresponding to the source IP address, which is the identifier of the source UE; and the destination SUPI is a permanent identifier of a UE corresponding to the destination IP address, which is the identifier of the destination UE. S-NSSAI is identification information of a network slice, and a 5QI value represents a combination of values of a resource type (RT), a default priority level (DPL), a packet delay budget (PDB), a packet error rate (PER), a default maximum data burst (DMDV), and a default average window (DAW). Both the S-NSSAI and the 5QI value are generated by the network capability exposure middleware based on the QoS value in tag of the XML file. When the source SUPI and the destination SUPI are initially empty, the network capability exposure middleware needs to acquire the the source SUPI and the destination SUPI by querying the NEF network element.

It is worth noting that the first quality requirement information of the UE refers to the QoS in the configuration file of the target application, which corresponds to the S-NSSAI and the 5QI value in the parsed tag.

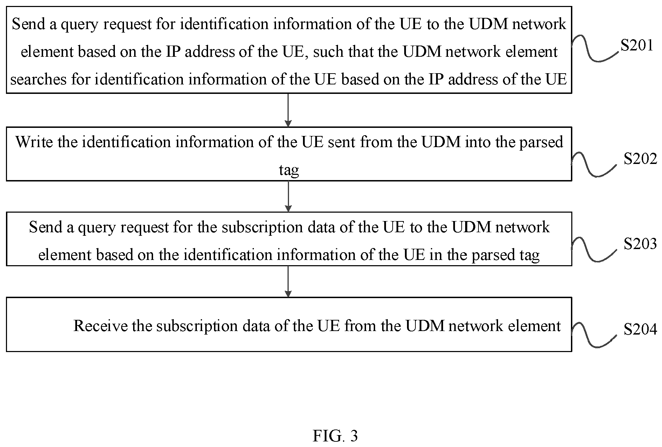

In some embodiments, FIG. 3 is a schematic flowchart of a data interaction method for a programmable logic controller according to some embodiments of the present disclosure. As illustrated in FIG. 3, a procedure of acquiring the subscription data of the UE from the UDM network element based on the IP address of the UE in the parsed label in S102 may include the following steps.

In S201, a query request for identification information of the UE is sent to the UDM network element based on the IP address of the UE, such that the UDM network element searches for identification information of the UE based on the IP address of the UE.

In S202, the identification information of the UE sent from the UDM is written into the parsed tag.

The identification information of the UE includes identification information of a source UE (that is, SUPI of the source UE), and identification information of a destination UE (that is, SUPI of the destination UE).

In some embodiments, using the IP address of the UE as an index, the query request for the identification information of the UE is sent to the NEF network element; the NEF network element receives the query request for the identification information of the UE, and sends the query request for the identification information of the UE to the UDM network element using the IP address of the UE as an index; the UDM network elements receives the query request for the identification information of the UE, searches for the identification of the UE based on the IP address of the UE, and sends the identification information of the UE to the NEF network element; the NEF network element receives the identification information of the UE, and sends the identification information of the UE to the network capability exposure middleware running on the server, and the network capability exposure middleware running on the server receives the identification information of the UE and writes the identification information of the UE into the parsed tag. The UE may be a destination UE or a source UE.

It should be noted that identification information of the source UE may be first searched, and then identification information of the destination UE may be searched; alternatively, the identification information of the destination UE may be first searched, and then the identification information of the source UE may be searched; and alternatively, the identification information of the source UE and the identification information of the destination UE may be simultaneously searched, which is not limited in the embodiments of the present disclosure.

In S203, a query request for the subscription data of the UE is sent to the UDM network element based on the identification information of the UE in the parsed tag.

In S204, the subscription data of the UE is received from the UDM network element.

In some embodiments, using the identification information of the UE in the parsed tag as an index, the network capability exposure middleware running on the server sends the query request for the subscription data of the UE to the UDM network element via the NEF network element; the UDM network element searches for the subscription data of the UE in local records based on the identification information of the UE in the query request for the subscription data of the UE, and sends the subscription data of the UE to the NEF network element; the NEF network element receives the subscription data of the UE, and sends the subscription data of the UE to the network capability exposure middleware running on the server; and the network capability exposure middleware running on the server receives the subscription data of the UE. The UE may be a destination UE or a source UE.

It should be noted that subscription information of the source UE may be first acquired, and then subscription information of the destination UE may be acquired; alternatively, the subscription information of the destination UE may be first acquired, and then the subscription information of the source UE may be acquired; and alternatively, the subscription information of the source UE and the subscription information of the destination UE may be simultaneously acquired, which is not limited in the embodiments of the present disclosure.

Optionally, a procedure of determining whether the pre-configured first quality requirement information of the UE is consistent with the second quality requirement information in the subscription data of the UE in the UDM network element in S103 may include: determining whether identification information of a first network slice and identification information of the first quality requirement in the first quality requirement information of the UE are respectively consistent with identification information of a second network slice and identification information of the second quality requirement in the second quality requirement information of the UE.

In a case that the identification information of the first network slice is consistent with the identification information of the second network slice, and the identification information of the first quality requirement is consistent with the identification information of the second quality requirement, it is determined that the first quality requirement information of the UE is consistent with the second quality requirement information of the UE.

In a case that the identification information of the first network slice is inconsistent with the identification information of the second network slice and/or the identification information of the first quality requirement is inconsistent with the identification information of the second quality requirement, it is determined that the first quality requirement information of the UE is inconsistent with the second quality requirement information of the UE.

The identification information of the first network slice is a first S-NSSAI, and the identification information of the first quality requirement is a first 5QI value; and the identification information of the second network slice is a second S-NSSAI, and the identification information of the second quality requirement is a second 5QI value.

In some embodiments, whether the first S-NSSAI of the UE is consistent with the second S-NSSAI of the UE is determined, and whether the first 5QI value of the UE is consistent with the second 5QI of the UE is determined.

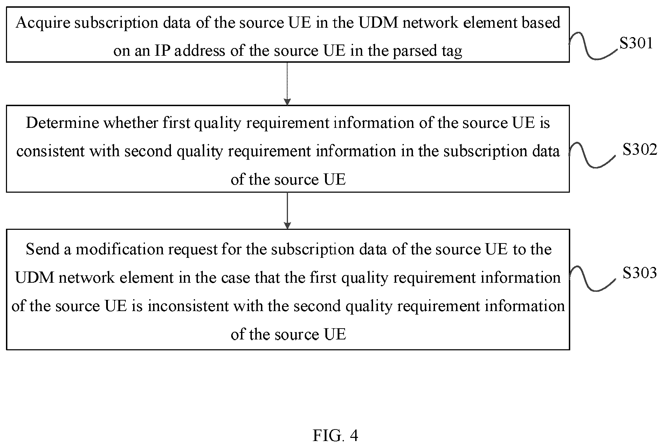

In some embodiments, the UE includes a source UE; FIG. 4 is a schematic flowchart of a data interaction method for a programmable logic controller according to some embodiments of the present disclosure. As illustrated in FIG. 4, acquiring the subscription data of the UE from the UDM network element based on the IP address of the UE in the parsed tag in S102 may include the following steps.

In S301, subscription data of the source UE in the UDM network element is acquired based on an IP address of the source UE in the parsed tag.

Determining whether the pre-configured first quality requirement information of the UE is consistent with the second quality requirement information in the subscription data of the UE in S103 may include the following steps.

In S302, whether first quality requirement information of the source UE is consistent with second quality requirement information in the subscription data of the source UE is determined.

In some embodiments, whether the first S-NSSAI in the first quality requirement information of the source UE is consistent with the second S-NSSAI in the second quality requirement information of the source UE is determined to acquire a first determination result; whether the first 5QI value in the first quality requirement information of the source UE is consistent with the second 5QI value in the second quality requirement information of the source UE is determined to acquire a second determination result; and it is determined that the first quality requirement information of the source UE is consistent with the second quality requirement information in the subscription information of the source UE in a case that the first determination result indicates consistent S-NSSAIs and the second determination result indicates consistent 5QI values.

Additionally, in a case that the first determination result indicates that the S-NSSAIs are inconsistent, and/or the second determination result indicates the 5QI values are inconsistent, it is determined that the first quality requirement information of the source UE is inconsistent with the second quality requirement information in the subscription data of the source UE.

Sending the modification request for the subscription data of the UE to the UDM network element in a case that the first quality requirement information of the UE is inconsistent with the second quality requirement information of the UE in S104 may include the following steps.

In S303, a modification request for the subscription data of the source UE is sent to the UDM network element in a case that the first quality requirement information of the source UE is inconsistent with the second quality requirement information of the source UE.

In some embodiments, the modification request for the subscription data of the source UE may be represented as <SUPI, S-NSSAI, 5QI>, wherein the SUPI is a SUPI of the source UE, and the S-NSSAI and the 5QI represent the first quality requirement information of the source UE.

In some embodiments, in a case that the first quality requirement information of the source UE is inconsistent with the second quality requirement information of the source UE, the server sends the modification request for the subscription data of the source UE to the NEF network element. The NEF network element receives the modification request for the subscription data of the source UE, and forwards the modification request for the subscription data of the source UE to the UDM network element. The UDM network element receives the modification request for the subscription data of the source UE, searches for the second S-NSSAI and the second 5QI value of the source UE from local records thereof based on the SUPI of the source UE in the modification request, and then writes the first S-NSAI and the first 5QI value of the source UE into the local records, thereby completing modification of the subscription data of the source UE.

Additionally, upon completion of the modification of the subscription data of the source UE, the UDM network element sends a modification result to the NEF network element, and sends a modification event notification for the subscription data of the source UE to the SMF network element via the Nudm interface. The NEF network element receives the modification result from the UDM network element, and returns the modification result to the network capability exposure middleware running on the server. The SMF network element receives the modification event notification for the subscription data of the source UE from the UDM network element, and initiates a PDU session modification process to modify a PDU session for the source UE specified in the modification event notification for the subscription data. In a case that the SMF network element completes the PDU session modification according to the procedure specified by 3GPP, the source UE specified in the event notification may perform data interaction for the target application based on the first quality requirement information.

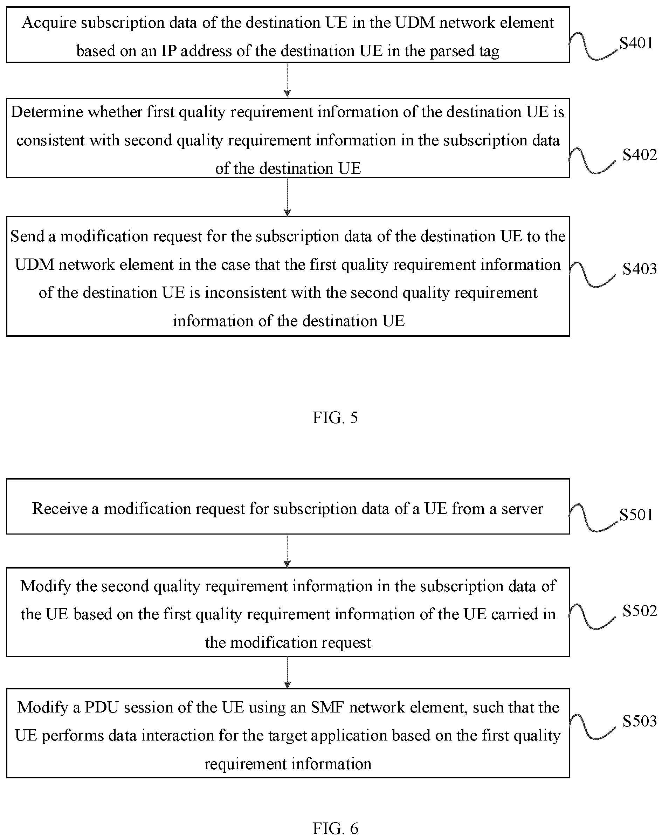

In some embodiments, the UE includes a destination UE; FIG. 5 is a schematic flowchart of a data interaction method for a programmable logic controller according to some embodiments of the present disclosure. As illustrated in FIG. 5, acquiring the subscription data of the UE from the UDM network element based on the IP address of the UE in the parsed tag in S102 may include the following steps.

In S401, subscription data of the destination UE in the UDM network element is acquired based on an IP address of the destination UE in the parsed tag.

Determining whether the pre-configured first quality requirement information of the UE is consistent with the second quality requirement information in the subscription data of the UE in S103 may include the following steps.

In S402, whether first quality requirement information of the destination UE is consistent with second quality requirement information in the subscription data of the destination UE is determined.

In some embodiments, whether the first S-NSSAI in the first quality requirement information of the destination UE is consistent with the second S-NSSAI in the second quality requirement information of the destination UE is determined to acquire a third determination result; whether the first 5QI value in the first quality requirement information of the destination UE is consistent with the second 5QI value in the second quality requirement information of the destination UE is determined to acquire a fourth determination result; and it is determined that the first quality requirement information of the destination UE is consistent with the second quality requirement information in the subscription information of the destination UE in a case that the third determination result indicates consistent S-NSSAIs and the fourth determination result indicates consistent 5QI values.

Additionally, in a case that the third determination result indicates that the S-NSSAIs are inconsistent, and/or the fourth determination result indicates the 5QI values are inconsistent, it is determined that the first quality requirement information of the destination UE is inconsistent with the second quality requirement information in the subscription data of the destination UE.

Sending the modification request for the subscription data of the UE to the UDM network element in a case that the first quality requirement information of the UE is inconsistent with the second quality requirement information of the UE in S104 may include the following steps.

In S403, a modification request for the subscription data of the destination UE is sent to the UDM network element in a case that the first quality requirement information of the destination UE is inconsistent with the second quality requirement information of the destination UE.

In some embodiments, the modification request for the subscription data of the destination UE may be represented as <SUPI, S-NSSAI, 5QI>, wherein the SUPI is a SUPI of the destination UE, and the S-NSSAI and the 5QI represent the first quality requirement information of the destination UE.

In some embodiments, in a case that the first quality requirement information of the destination UE is inconsistent with the second quality requirement information of the destination UE, the server sends the modification request for the subscription data of the destination UE to the NEF network element. The NEF network element receives the modification request for the subscription data of the destination UE, and forwards the modification request for the subscription data of the destination UE to the UDM network element. The UDM network element receives the modification request for the subscription data of the destination UE, searches for the second S-NSSAI and the second 5QI value of the destination UE from local records thereof based on the SUPI of the destination UE in the modification request, and then writes the first S-NSAI and the first 5QI value of the destination UE into the local records, thereby completing modification of the subscription data of the destination UE.

Additionally, upon completion of the modification of the subscription data of the destination UE, the UDM network element sends a modification result to the NEF network element, and sends a modification event notification for the subscription data of the destination UE to the SMF network element via the Nudm interface. The NEF network element receives the modification result from the UDM network element, and returns the modification result to the network capability exposure middleware running on the server. The SMF network element receives the modification event notification for the subscription data of the destination UE from the UDM network element, and initiates a PDU session modification process to modify a PDU session for the destination UE specified in the modification event notification for the subscription data. In a case that the SMF network element completes the PDU session modification according to the procedure specified by 3GPP, the destination UE specified in the event notification may perform data interaction for the target application based on the first quality requirement information.

Optionally, prior to determining whether the pre-configured first quality requirement information of the UE is consistent with the second quality requirement information in the subscription data of the UE in S103, the method may further include: determining the first quality requirement information of the UE from the parsed tag.

The parsed tag may be represented as <Source IP Address, Destination IP Address, Source SUPI, Destination SUPI, S-NSSAI, 5QI>; wherein the S-NSSAI and the 5QI represent the first quality requirement information; and the first quality requirement information of the UE may also refer to the QoS in the configuration file of the target application.

Optionally, prior to determining whether the pre-configured first quality requirement information of the UE is consistent with the second quality requirement information in the subscription data of the UE in S103, the method may further include: retrieving the first quality requirement information of the UE from a predetermined database based on fields corresponding to information channel in the parsed tag.

The fields corresponding to the information channel are Source field and Destination field in the configuration file of the target application.

In some embodiments, the configuration file of the target application includes the following field information related to 5G network capability exposure: (1) an IP address of a device where functional blocks are deployed, and (2) a communication port for event or data interaction between functional blocks. A specific format of the field information is: <Connection Source="xxx" Destination="xxx"/>, that is, the configuration file of the target application does not include QoS.

It should be noted that the network capability exposure middleware running on the server maintains an internal database, with records formatted as: <ID=<Source, Destination>, QoS="xxx"/>. Industrial configuration software users may add records to the predetermined database based on process programming needs.

In the embodiments of the present disclosure, in a case that the network capability exposure middleware running on the server reads the configuration file of the target application, the network capability exposure middleware extracts the Source field and Destination field, forms the index <Source, Destination>, and then queries the local database to retrieve the first quality requirement information of the UE, i.e., the QoS of the UE.

Additionally, the network capability exposure middleware running on the server may configure the 5G network based on the queried database records, for example, the QoS of the UE.

Therefore, the embodiments of the present disclosure provide a data interaction method for a programmable logic controller. In a case that the pre-configured first quality requirement information of the UE is inconsistent with the second quality requirement information in the subscription data of the UE in the UDM network element, the second quality requirement information in the UDM network element is modified, and the PDU session of the UE is modified. In this way, when the target application developed using industrial configuration software is running on the UE, the UE may perform data interaction with the target application based on pre-configured quality requirements.

Furthermore, according to the embodiments of the present disclosure, industrial configuration software users are allowed to invoke 5G network capabilities to ensure the priority of industrial control business data transmission according to process service requirements, with no need to understand the underlying operating principles of the 5G network. This allows industrial configuration software users to invoke, using a zero-code approach, the APIs provided by the NEF network element without writing low-level code. No modifications are required to the conventional protocol handling mechanisms in the 5G terminals or the 5G core network.

Additionally, the present disclosure enables 5G network administrators to independently adjust the 5G network capability exposure configuration based on network operation conditions, with no need of frequent communication with industrial configuration software users. By adjusting a policy for generating the parsed tags in the network capability exposure middleware, 5G network administrators may flexibly adjust an adaptation policy of the 5G network for industrial control services.

FIG. 6 is a schematic flowchart of a data interaction method for a programmable logic controller according to some embodiments of the present disclosure. As illustrated in FIG. 6, the method may include the following steps.

In S501, a modification request for subscription data of a UE is received from a server.

The modification request is sent by the server in a case that the server determines pre-configured first quality requirement information of the UE is inconsistent with second quality requirement information in the subscription data of the UE, and the subscription data of the UE is acquired by the server from the UDM network element based on an IP address of the UE in a parsed tag, the parsed tag is generated by the server by parsing a configuration file of a target application, wherein the target application is an application graphically developed using industrial configuration software.

In S502, the second quality requirement information in the subscription data of the UE is modified based on the first quality requirement information of the UE carried in the modification request.

In S503, a PDU session of the UE is modified using an SMF network element, such that the UE performs data interaction for the target application based on the first quality requirement information.

The UE may be a destination UE or a source UE.

In some embodiments, in a case that the first quality requirement information of the UE is inconsistent with the second quality requirement information of the UE, the server sends the modification request for the subscription data of the UE to an NEF network element. The NEF network element receives the modification request for the subscription data of the UE, and forwards the modification request for the subscription data of the UE to the UDM network element. The UDM network element receives the modification request for the subscription data of the UE, searches for the second quality requirement information of the UE from local records thereof based on the identification information of the UE in the modification request, and then writes the first quality requirement information of the UE of the modification request into the local records, thereby completing modification of the subscription data of the UE.

In the embodiments of the present disclosure, upon completion of the modification of the subscription data of the UE, the UDM network element sends a modification result to the NEF network element, and sends a modification event notification for the subscription data of the UE to the SMF network element via the Nudm interface. The NEF network element receives the modification result from the UDM network element, and returns the modification result to the network capability exposure middleware running on the server. The SMF network element receives the modification event notification for the subscription data of the UE from the UDM network element, and initiates a PDU session modification process to modify a PDU session for the UE specified in the modification event notification for the subscription data. In a case that the SMF network element completes the PDU session modification according to the procedure specified by 3rd Generation Partnership Project (3GPP), the UE specified in the event notification may perform data interaction for the target application based on the first quality requirement information.

Therefore, the embodiments of the present disclosure provide a data interaction method for a programmable logic controller. The method includes: receiving a modification request for subscription data of a UE from a server; modifying the second quality requirement information in the subscription data of the UE based on the first quality requirement information of the UE carried in the modification request, and modifying a PDU session of the UE using an SMF network element, such that the UE performs data interaction for the target application based on the first quality requirement information. In a case that the pre-configured first quality requirement information of the UE is inconsistent with the second quality requirement information in the subscription data of the UE in the UDM network element, the second quality requirement information in the UDM network element is modified, and the PDU session of the UE is modified. In this way, when the target application developed using industrial configuration software is running on the UE, the UE may perform data interaction with the target application based on pre-configured quality requirements.

Hereinafter, a data interaction apparatus for a programmable logic controller, an electronic device, and a storage medium for performing the data interaction method for the programmable logic controller are described. For the specific implementation and technical effects, reference may be made to related content of the data interaction method for the programmable logic controller, which are not described herein any further.

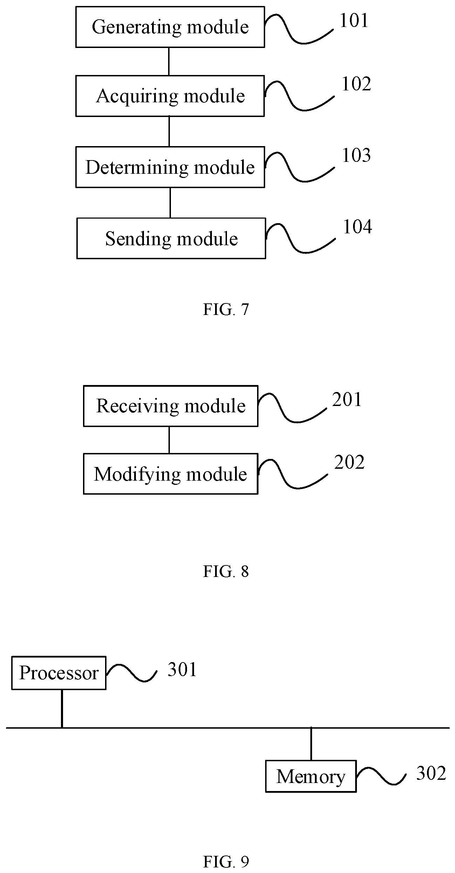

FIG. 7 is a schematic structural diagram of a data interaction apparatus for a programmable logic controller according to some embodiments of the present disclosure. As illustrated in FIG. 7, the apparatus includes: a generating module 101, an acquiring module 102, a determining module 103, and a sending module 104.

The generating module 101 is configured to generate a parsed tag by parsing a configuration file of a target application, wherein the target application is an application graphically developed using industrial configuration software.

The acquiring module 102 is configured to acquire subscription data of a UE from a UDM network element based on an IP address of the UE in the parsed tag.

The determining module 103 is configured to determine whether pre-configured first quality requirement information of the UE is consistent with second quality requirement information in the subscription data of the UE.

The sending module 104 is configured to send a modification request for the subscription data of the UE to the UDM network element in a case that the first quality requirement information of the UE is inconsistent with the second quality requirement information of the UE, such that the UDM network element modifies the second quality requirement information of the UE based on the first quality requirement information of the UE, and modifies a PDU session of the UE using an SMF network element, whereby the UE performs data interaction for the target application based on the first quality requirement information.

For example, the acquiring module 102 is configured to send a query request for identification information of the UE to the UDM network element based on the IP address of the UE, such that the UDM network element searches for identification information of the UE based on the IP address of the UE; write the identification information of the UE sent from the UDM into the parsed tag; send a query request for the subscription data of the UE to the UDM network element based on the identification information of the UE in the parsed tag; and receive the subscription data of the UE from the UDM network element.

Optionally, the determining module 103 is configured to determine whether identification information of a first network slice and identification information of the first quality requirement in the first quality requirement information of the UE are respectively consistent with identification information of a second network slice and identification information of the second quality requirement in the second quality requirement information of the UE; wherein in a case that the identification information of the first network slice is consistent with the identification information of the second network slice, and the identification information of the first quality requirement is consistent with the identification information of the second quality requirement, it is determined that the first quality requirement information of the UE is consistent with the second quality requirement information of the UE; or in a case that the identification information of the first network slice is inconsistent with the identification information of the second network slice and/or the identification information of the first quality requirement is inconsistent with the identification information of the second quality requirement, it is determined that the first quality requirement information of the UE is inconsistent with the second quality requirement information of the UE.

Optionally, the UE includes a source UE; and the acquiring module 102 is configured to acquire subscription data of the source UE from the UDM network element based on an IP address of the source UE in the parsed tag.

The determining module 103 is configured to determine whether first quality requirement information of the source UE is consistent with second quality requirement information in the subscription data of the source UE.

The sending module 104 is configured to send a modification request for the subscription data of the source UE to the UDM network element in a case that the first quality requirement information of the source UE is inconsistent with the second quality requirement information of the source UE.

Optionally, the UE includes a destination UE; and the acquiring module 102 is configured to acquire subscription data of the destination UE from the UDM network element based on an IP address of the destination UE in the parsed tag.

The determining module 103 is configured to determine whether first quality requirement information of the destination UE is consistent with second quality requirement information in the subscription data of the destination UE.

The sending module 104 is configured to send a modification request for the subscription data of the destination UE to the UDM network element in a case that the first quality requirement information of the destination UE is inconsistent with the second quality requirement information of the destination UE.

Optionally, the apparatus further includes: a determining module, configured to determine the first quality requirement information of the UE from the parsed tag; or retrieving the first quality requirement information of the UE from a predetermined database based on a field corresponding to an information channel in the parsed tag.

FIG. 8 is a schematic structural diagram of a data interaction apparatus for a programmable logic controller according to some embodiments of the present disclosure. As illustrated in FIG. 8, the apparatus includes: a receiving module 201, and a modifying module 202.

The receiving module 201 is configured to receive a modification request for subscription data of a UE from a server, wherein the modification request is sent by the server in a case that the server determines pre-configured first quality requirement information of the UE is inconsistent with second quality requirement information in the subscription data of the UE, and the subscription data of the UE is acquired by the server from the UDM network element based on an IP address of the UE in a parsed tag, the parsed tag is generated by the server by parsing a configuration file of a target application, wherein the target application is an application graphically developed using industrial configuration software;
The modifying module 202 is configured to modify the second quality requirement information in the subscription data of the UE based on the first quality requirement information of the UE carried in the modification request, and modify a PDU session of the UE using an SMF network element, such that the UE performs data interaction for the target application based on the first quality requirement information.

The apparatus is configured to perform the method as described in the above embodiments. The apparatus observes the same principles and achieves the same technical effects, which are not described herein any further.

These modules may be configured as one or more integrated circuits that implement the above methods, for example, one or more application-specific integrated circuits (ASICs), or one or more digital signal processors (DSPs), or one or more field-programmable gate arrays (FPGAs), or the like. For example, in a case that any of the above modules is implemented in the form of processing element scheduling program code, the processing element may be a general-purpose processor, such as a central processing unit (CPU) or other processors capable of calling program code. Additionally, these modules may be integrated together and implemented in the form of a system-on-a-chip (SoC).

FIG. 9 is a structural block diagram of an electronic device according to some embodiments of the present disclosure. As illustrated in FIG. 9, the electronic device includes a processor 301 and a memory 302.

The memory 302 is configured to store one or more programs, and the processor 301 is configured to call the one or more programs stored in the memory 302 to perform the method according to the above embodiments. The specific implementation and the technical effects are similar to those described in the above embodiments, which are not described herein any further.

Optionally, some embodiments of the present disclosure further provide a program product, for example, a computer-readable storage medium. The program product includes one or more programs. The one or more programs, when loaded and run by the processor, cause the processor to perform the method according to the above embodiments.

In the embodiments according to the present disclosure, it should be understood that the disclosed apparatus and method may be implemented in other manners. The above described device embodiments are merely illustrative. For example, the unit division is merely logical function division and may be other divisions in actual practice. For example, multiple units or components may be combined or integrated into another device, or some features can be ignored or not performed. Additionally, the displayed or discussed mutual couplings or direct couplings or communication connections may be implemented through some interfaces. The indirect couplings or communication connections between the devices or units may be implemented in electronic, mechanical or other forms.

The units which are described as separate components may be physically separated or may be not physically separated, and the components which are illustrated as units may be or may not be physical units, that is, the components may be located in the same position or may be distributed into a plurality of network units. Some of or all of the units may be selected according to actual needs to achieve the objectives of the solutions of the embodiments.

Additionally, functional units in the embodiments of the present disclosure may be integrated into one processing unit, or each of the units may exist along physically, or two or more units may be integrated into one unit. The above integrated unit may be practiced in the form of hardware, and may also be practiced in the form of software plus a software functional unit.

The integrated unit practiced in the form of software function unit may be stored in a computer-readable storage medium. The software functional unit is stored in a storage medium, including several instructions, when being executed, cause a computer device (which may be a personal computer, a server, a network device or the like) or a processor to perform a part of the steps of the methods in various embodiments of the present application. The storage medium includes various media capable of storing program code, for example, a USB flash disk, a removable hard disk, a read-only memory (ROM), a random access memory (RAM), a magnetic disk, or an optical disc.

Described above are merely preferred embodiments of the present disclosure, but are not intended to limit the present disclosure. A person skilled in the art may derive various modifications and variations.

## Claims

1. A data interaction method for a programmable logic controller, **characterized in** comprising:
generating (S101) a parsed tag by parsing a configuration file of a target application, wherein the target application is an application graphically developed using industrial configuration software;
acquiring (S102) subscription data of a user equipment, UE, from a user data management, UDM, network element based on an internet protocol, IP, address of the UE in the parsed tag;
determining (S103) whether pre-configured first quality requirement information of the UE is consistent with second quality requirement information in the subscription data of the UE; and
sending (S104) a modification request for the subscription data of the UE to the UDM network element in a case that the first quality requirement information of the UE is inconsistent with the second quality requirement information of the UE, such that the UDM network element modifies the second quality requirement information of the UE based on the first quality requirement information of the UE, and modifies a protocol data unit, PDU, session of the UE using a session management function, SMF, network element, whereby the UE performs data interaction for the target application based on the first quality requirement information.

2. The method according to claim 1, **characterized in that** the acquiring the subscription data of the UE from the UDM network element based on the IP address of the UE in the parsed tag comprises:
sending (S201) a query request for identification information of the UE to the UDM network element based on the IP address of the UE, such that the UDM network element searches for identification information of the UE based on the IP address of the UE;
writing (S202) the identification information of the UE sent from the UDM into the parsed tag;
sending (S203) a query request for the subscription data of the UE to the UDM network element based on the identification information of the UE in the parsed tag; and
receiving (S204) the subscription data of the UE from the UDM network element.

3. The method according to claim 1 or 2, **characterized in that** the determining whether the pre-configured first quality requirement information of the UE is consistent with the second quality requirement information in the subscription data of the UE comprises:
determining whether identification information of a first network slice and identification information of a first quality requirement in the first quality requirement information of the UE are respectively consistent with identification information of a second network slice and identification information of a second quality requirement in the second quality requirement information of the UE;
determining the first quality requirement information of the UE is consistent with the second quality requirement information of the UE in a case that the identification information of the first network slice is consistent with the identification information of the second network slice, and the identification information of the first quality requirement is consistent with the identification information of the second quality requirement; or
determining the first quality requirement information of the UE is inconsistent with the second quality requirement information of the UE in a case that the identification information of the first network slice is inconsistent with the identification information of the second network slice and/or the identification information of the first quality requirement is inconsistent with the identification information of the second quality requirement.

4. The method according to any one of claims 1 to 3, **characterized in that** the UE comprises a source UE; and the acquiring the subscription data of the UE from the UDM network element based on the IP address of the UE in the parsed tag comprises:
acquiring (S301) subscription data of the source UE from the UDM network element based on an IP address of the source UE in the parsed tag;
wherein the determining whether the pre-configured first quality requirement information of the UE is consistent with the second quality requirement information in the subscription data of the UE comprises:
determining (S302) whether first quality requirement information of the source UE is consistent with second quality requirement information in the subscription data of the source UE; and
wherein the sending the modification request for the subscription data of the UE to the UDM network element in a case that the first quality requirement information of the UE is inconsistent with the second quality requirement information of the UE comprises:
sending (S303) a modification request for the subscription data of the source UE to the UDM network element in a case that the first quality requirement information of the source UE is inconsistent with the second quality requirement information of the source UE.

5. The method according to any one of claims 1 to 3, **characterized in that** the UE comprises a destination UE; and the acquiring the subscription data of the UE from the UDM network element based on the IP address of the UE in the parsed tag comprises:
acquiring (S401) subscription data of the destination UE from the UDM network element based on an IP address of the destination UE in the parsed tag;
wherein the determining whether the pre-configured first quality requirement information of the UE is consistent with the second quality requirement information in the subscription data of the UE comprises:
determining (S402) whether first quality requirement information of the destination UE is consistent with second quality requirement information in the subscription data of the destination UE; and
wherein the sending the modification request for the subscription data of the UE to the UDM network element in a case that the first quality requirement information of the UE is inconsistent with the second quality requirement information of the UE comprises:
sending (S403) a modification request for the subscription data of the destination UE to the UDM network element in a case that the first quality requirement information of the destination UE is inconsistent with the second quality requirement information of the destination UE.

6. The method according to any one of claims 1 to 5, **characterized in that** prior to determining whether the pre-configured first quality requirement information of the UE is consistent with the second quality requirement information in the subscription data of the UE, the method further further comprises:
determining the first quality requirement information of the UE from the parsed tag; or
retrieving the first quality requirement information of the UE from a predetermined database based on a field corresponding to an information channel in the parsed tag.

7. A data interaction method for a programmable logic controller, applicable to a user data management UDM, network element, **characterized in that** the data interaction method comprises:
receiving (S501) a modification request for subscription data of a user equipment, UE, from a server, wherein the modification request is sent from the server in a case that the server determines pre-configured first quality requirement information is inconsistent with second quality requirement information in the subscription data of the UE, and the subscription data of the UE is acquired by the server from the UDM network element based on an internet protocol, IP, address of the UE in a parsed tag, the parsed tag is generated by the server by parsing a configuration file of a target application, wherein the target application is an application graphically developed using industrial configuration software;
modifying (S502) the second quality requirement information in the subscription data of the UE based on the first quality requirement information of the UE carried in the modification request; and
modifying (S503) a protocol session unit, PDU, session of the UE using a session management function, SMF, network element, such that the UE performs data interaction for the target application based on the first quality requirement information.

8. The data interaction method according to claim 7, **characterized in** further comprising:
receiving a query request for identification information of the UE sent by, based on the IP address of the UE, the server;
searching for identification information of the UE based on the IP address of the UE;
sending the identification information of the UE to the server to writie the identification information of the UE into the parsed tag;
receiving a query request for the subscription data of the UE sent by, based on the identification information of the UE in the parsed tag, the server; and
sending the subscription data of the UE to the server.

9. A data interaction apparatus for a programmable logic controller, applicable to a server, **characterized in** the data interaction apparatus comprising:
a generating module (101), configured to generate a parsed tag by parsing a configuration file of a target application, wherein the target application is an application graphically developed using industrial configuration software;
an acquiring module (102), configured to acquire subscription data of a user equipment, UE, from a user data management, UDM, network element based on an internet protocol, IP, address of the UE in the parsed tag;
a determining module (103), configured to determine whether pre-configured first quality requirement information of the UE is consistent with second quality requirement information in the subscription data of the UE; and
a sending module (104), configured to send a modification request for the subscription data of the UE to the UDM network element in a case that the first quality requirement information of the UE is inconsistent with the second quality requirement information of the UE, such that the UDM network element modifies the second quality requirement information of the UE based on the first quality requirement information of the UE, and modifies a protocol data unit, PDU, session of the UE using a session management function, SMF, network element, whereby the UE performs data interaction for the target application based on the first quality requirement information.

10. The data interaction apparatus according to claim 9, **characterized in that**,
the acquiring module (102) is further configured to send a query request for identification information of the UE to the UDM network element based on the IP address of the UE, such that the UDM network element searches for identification information of the UE based on the IP address of the UE; write the identification information of the UE sent from the UDM into the parsed tag; send a query request for the subscription data of the UE to the UDM network element based on the identification information of the UE in the parsed tag; receive the subscription data of the UE from the UDM network element.

11. The data interaction apparatus according to claim 9 or 10, **characterized in that**,
the determining module (103) is further conifigured to determine whether identification information of a first network slice and identification information of a first quality requirement in the first quality requirement information of the UE are respectively consistent with identification information of a second network slice and identification information of a second quality requirement in the second quality requirement information of the UE; determine the first quality requirement information of the UE is consistent with the second quality requirement information of the UE in a case that the identification information of the first network slice is consistent with the identification information of the second network slice, and the identification information of the first quality requirement is consistent with the identification information of the second quality requirement; or, determine the first quality requirement information of the UE is inconsistent with the second quality requirement information of the UE in a case that the identification information of the first network slice is inconsistent with the identification information of the second network slice and/or the identification information of the first quality requirement is inconsistent with the identification information of the second quality requirement.

12. The data interaction apparatus according to any one of claims 9 to 11, **characterized in that** the UE comprises a source UE;
the acquiring module (102) is further conifigured to acquire subscription data of the source UE from the UDM network element based on an IP address of the source UE in the parsed tag, so as to acquire the subscription data of the UE;
the determining module (103) is further conifigured to determine whether first quality requirement information of the source UE is consistent with second quality requirement information in the subscription data of the source UE, to determine whether the pre-configured first quality requirement information of the UE is consistent with the second quality requirement information in the subscription data of the UE; and
the sending module (104) is further confiuged to send a modification request for the subscription data of the source UE to the UDM network element if the first quality requirement information of the source UE is inconsistent with the second quality requirement information of the source UE, to send the modification request for the subscription data of the UE to the UDM network element.

13. The data interaction apparatus according to any one of claims 9 to 11, **characterized in that** the UE comprises a destination UE;
the acquiring module (102) is further configured to acquire subscription data of the destination UE from the UDM network element based on an IP address of the destination UE in the parsed tag, so as to acquire the subscription data of the UE;
the determining module (103) is further configured to determine whether first quality requirement information of the destination UE is consistent with second quality requirement information in the subscription data of the destination UE, to determine whether the pre-configured first quality requirement information of the UE is consistent with the second quality requirement information in the subscription data of the UE; and
the sending module (104) is further configured to send a modification request for the subscription data of the destination UE to the UDM network element in a case that the first quality requirement information of the destination UE is inconsistent with the second quality requirement information of the destination UE, to send the modification request for the subscription data of the UE to the UDM network element.

14. A data interaction apparatus for a programmable logic controller, applicable to a user data management, UDM, network element, **characterized in that** the data interaction apparatus comprises:
a receiving module (201), configured to receive a modification request for subscription data of a user equipment, UE, from a server, wherein the modification request is sent from the server in a case that the server determines pre-configured first quality requirement information is inconsistent with second quality requirement information in the subscription data of the UE, and the subscription data of the UE is acquired by a server from a user data management, UDM, network element based on an internet protocol, IP, address of the UE in a parsed tag, the parsed tag is generated by the server by parsing a configuration file of a target application, wherein the target application is an application graphically developed using industrial configuration software;
a modifying module (202), configured to modify the second quality requirement information in the subscription data of the UE based on the first quality requirement information of the UE carried in the modification request, and modify a protocol session unit, PDU, session of the UE using a session management function, SMF, network element, such that the UE performs data interaction for the target application based on the first quality requirement information.

15. The data interaction apparatus according to claim 14, **characterized in that**,
the receiving module (201) is further configured to receive a query request for identification information of the UE sent from, based on the IP address of the UE, the server;
the modifying module (202) is further configured to search for identification information of the UE based on the IP address of the UE; and
the receiving module (201) is further configured to send the identification information of the UE to the server to writie the identification information of the UE into the parsed tag; receive a query request for the subscription data of the UE sent by, based on the identification information of the UE in the parsed tag, the server; and send the subscription data of the UE to the server.

## Patentansprüche

1. Dateninteraktionsverfahren für eine speicherprogrammierbare Steuerung, **dadurch gekennzeichnet, dass** es Folgendes umfasst:
Erzeugen (S101) eines geparsten Tags durch Parsen einer Konfigurationsdatei einer Zielanwendung, wobei die Zielanwendung eine mittels industrieller Konfigurationssoftware grafisch entwickelte Anwendung ist;
Erfassen (S102) von Subskriptionsdaten eines Benutzergeräts (UE) aus einem Benutzerdatenverwaltungs(UDM) -Netzelement auf der Grundlage einer Internetprotokoll-(IP)-Adresse des UE in dem geparsten Tag;
Bestimmen (S103), ob vorkonfigurierte erste Qualitätsanforderungsinformationen des UE mit zweiten Qualitätsanforderungsinformationen in den Subskriptionsdaten des UE übereinstimmen; und
Senden (S104) einer Änderungsanforderung für die Subskriptionsdaten des UE an das UDM-Netzwerkelement für den Fall, dass die ersten Qualitätsanforderungsinformationen des UE nicht mit den zweiten Qualitätsanforderungsinformationen des UE übereinstimmen, sodass das UDM-Netzwerkelement die zweiten Qualitätsanforderungsinformationen des UE basierend auf den ersten Qualitätsanforderungsinformationen des UE ändert und eine Protokolldateneinheit (PDU)-Sitzung des UE unter Verwendung eines Sitzungsverwaltungsfunktion (SMF)-Netzwerkelements ändert, wodurch das UE eine Dateninteraktion für die Zielanwendung basierend auf den ersten Qualitätsanforderungsinformationen durchführt.

2. Verfahren nach Anspruch 1, **dadurch gekennzeichnet, dass** das Erfassen von Subskriptionsdaten des UE aus dem UDM-Netzwerkelement auf der Grundlage der IP-Adresse des UE in dem geparsten Tag Folgendes umfasst:
Senden (S201) einer Abfrageanforderung für Identifikationsinformationen des UE an das UDM-Netzelement basierend auf der IP-Adresse des UE, so dass das UDM-Netzelement nach Identifikationsinformationen des UE basierend auf der IP-Adresse des UE sucht;
Schreiben (S202) der vom UDM gesendeten Identifikationsinformationen des UE in das geparste Tag;
Senden (S203) einer Abfrageanforderung für die Subskriptionsdaten des UE an das UDM-Netzwerkelement basierend auf den Identifikationsinformationen des UE im geparsten Tag; und
Empfangen (S204) der Subskriptionsdaten des UE vom UDM-Netzwerkelement.

3. Verfahren nach Anspruch 1 oder 2, **dadurch gekennzeichnet, dass** das Bestimmen, ob die vorkonfigurierten ersten Qualitätsanforderungsinformationen des UE mit den zweiten Qualitätsanforderungsinformationen in den Subskriptionsdaten des UE übereinstimmen, umfasst:
Bestimmen, ob Identifikationsinformationen eines ersten Netzwerkslices und Identifikationsinformationen einer ersten Qualitätsanforderung in den ersten Qualitätsanforderungsinformationen des UE jeweils mit Identifikationsinformationen eines zweiten Netzwerkslices und Identifikationsinformationen einer zweiten Qualitätsanforderung in den zweiten Qualitätsanforderungsinformationen des UE übereinstimmen;
Bestimmen, dass die ersten Qualitätsanforderungsinformationen des UE mit den zweiten Qualitätsanforderungsinformationen des UE übereinstimmen, wenn die Identifikationsinformationen des ersten Netzwerkslice mit den Identifikationsinformationen des zweiten Netzwerkslice übereinstimmen und die Identifikationsinformationen der ersten Qualitätsanforderung mit den Identifikationsinformationen der zweiten Qualitätsanforderung übereinstimmen; oder
Bestimmen, dass die ersten Qualitätsanforderungsinformationen des UE nicht mit den zweiten Qualitätsanforderungsinformationen des UE ü bereinstimmen, wenn die Identifikationsinformationen des ersten Netzwerkslice nicht mit den Identifikationsinformationen des zweiten Netzwerkslice ü bereinstimmen und/oder die Identifikationsinformationen der ersten Qualitätsanforderung nicht mit den Identifikationsinformationen der zweiten Qualitätsanforderung übereinstimmen.

4. Verfahren nach einem der Ansprüche 1 bis 3, **dadurch gekennzeichnet, dass** das UE ein Quell-UE umfasst; und das Erfassen von Subskriptionsdaten des UE aus dem UDM-Netzwerkelement auf der Grundlage der IP-Adresse des UE in dem geparsten Tag Folgendes umfasst:
Erfassen (S301) von Subskriptionsdaten des Quell-UE aus dem UDM-Netzwerkelement auf der Grundlage einer IP-Adresse des Quell-UE in dem geparsten Tag;
wobei das Bestimmen, ob die vorkonfigurierten ersten Qualitätsanforderungsinformationen des UE mit den zweiten Qualitätsanforderungsinformationen in den Subskriptionsdaten des UE ü bereinstimmen, umfasst:
Bestimmen (S302), ob erste Qualitätsanforderungsinformationen des Quell-UE mit zweiten Qualitätsanforderungsinformationen in den Subskriptionsdaten des Quell-UE übereinstimmen; und
wobei das Senden der Änderungsanforderung für die Subskriptionsdaten des UE an das UDM-Netzwerkelement für den Fall, dass die ersten Qualitätsanforderungsinformationen des UE nicht mit den zweiten Qualitätsanforderungsinformationen des UE übereinstimmen, umfasst:
Senden (S303) einer Änderungsanforderung für die Subskriptionsdaten des Quell-UE an das UDM-Netzwerkelement für den Fall, dass die ersten Qualitätsanforderungsinformationen des Quell-UE nicht mit den zweiten Qualitätsanforderungsinformationen des Quell-UE übereinstimmen.

5. Verfahren nach einem der Ansprüche 1 bis 3, **dadurch gekennzeichnet, dass** das UE ein Ziel-UE umfasst; und das Erfassen von Subskriptionsdaten des UE aus dem UDM-Netzwerkelement auf der Grundlage der IP-Adresse des UE in dem geparsten Tag Folgendes umfasst:
Erfassen (S401) von Subskriptionsdaten des Ziel-UE aus dem UDM-Netzwerkelement auf der Grundlage einer IP-Adresse des Ziel-UE in dem geparsten Tag;
wobei das Bestimmen, ob die vorkonfigurierten ersten Qualitätsanforderungsinformationen des UE mit den zweiten Qualitätsanforderungsinformationen in den Subskriptionsdaten des UE ü bereinstimmen, umfasst:
Bestimmen (S402), ob erste Qualitätsanforderungsinformationen des Ziel-UE mit zweiten Qualitätsanforderungsinformationen in den Subskriptionsdaten des Ziel-UE übereinstimmen; und
wobei das Senden der Änderungsanforderung für die Subskriptionsdaten des UE an das UDM-Netzwerkelement für den Fall, dass die ersten Qualitätsanforderungsinformationen des UE nicht mit den zweiten Qualitätsanforderungsinformationen des UE übereinstimmen, umfasst:
Senden (S403) einer Änderungsanforderung für die Subskriptionsdaten des Ziel-UE an das UDM-Netzwerkelement für den Fall, dass die ersten Qualitätsanforderungsinformationen des Ziel-UE nicht mit den zweiten Qualitätsanforderungsinformationen des Ziel-UE übereinstimmen.

6. Verfahren nach einem der Ansprüche 1 bis 5, **dadurch gekennzeichnet, dass** vor dem Bestimmen, ob die vorkonfigurierten ersten Qualitätsanforderungsinformationen des UE mit den zweiten Qualitätsanforderungsinformationen in den Subskriptionsdaten des UE übereinstimmen, das Verfahren ferner umfasst:
Bestimmen der ersten Qualitätsanforderungsinformationen des UE aus dem geparsten Tag;
oder
Abrufen der ersten Qualitätsanforderungsinformationen des UE aus einer vorbestimmten Datenbank basierend auf einem Feld, das einem Informationskanal in dem geparsten Tag entspricht.

7. Dateninteraktionsverfahren für eine speicherprogrammierbare Steuerung, anwendbar auf ein Benutzerdatenverwaltungs(UDM) -Netzelement, **dadurch gekennzeichnet, dass** das Dateninteraktionsverfahren umfasst:
Empfangen (S501) einer Änderungsanforderung für Subskriptionsdaten eines Benutzergeräts (UE) von einem Server, wobei die Änderungsanforderung vom Server in einem Fall gesendet wird, in dem der Server bestimmt, dass vorkonfigurierte erste Qualitätsanforderungsinformationen nicht mit zweiten Qualitätsanforderungsinformationen in den Subskriptionsdaten des UE übereinstimmen, und die Subskriptionsdaten des UE vom Server aus dem UDM-Netzwerkelement basierend auf einer Internetprotokoll (IP)-Adresse des UE in einem geparsten Tag erworben werden, wobei der geparste Tag vom Server durch Parsen einer Konfigurationsdatei einer Zielanwendung erzeugt wird, wobei die Zielanwendung eine mittels industrieller Konfigurationssoftware grafisch entwickelte Anwendung ist;
ändern (S502) der zweiten Qualitätsanforderungsinformationen in den Subskriptionsdaten des UE basierend auf den ersten Qualitätsanforderungsinformationen des UE, die in der Änderungsanforderung mitgeführt werden; und
Ändern (S503) einer Protokolldateneinheit (PDU)-Sitzung des UE mithilfe eines Sitzungsverwaltungsfunktion (SMF)-Netzwerkelements, so dass das UE Dateninteraktion für die Zielanwendung basierend auf den ersten Qualitätsanforderungsinformationen durchführt.

8. Dateninteraktionsverfahren nach Anspruch 7, **dadurch gekennzeichnet, dass** es weiterhin umfasst:
Empfangen einer Abfrageanforderung für Identifikationsinformationen des UE, die vom Server basierend auf der IP-Adresse des UE gesendet wird;
Suchen nach Identifikationsinformationen des UE basierend auf der IP-Adresse des UE;
Senden der Identifikationsinformationen des UE an den Server, sodass der Server die Identifikationsinformationen des UE in das geparste Tag schreibt;
Empfangen einer Abfrageanforderung für die Subskriptionsdaten des UE, die von dem Server basierend auf den Identifikationsinformationen des UE in dem geparsten Tag gesendet wird; und
Senden der Subskriptionsdaten des UE an den Server.

9. Dateninteraktionsvorrichtung für eine speicherprogrammierbare Steuerung, anwendbar auf einen Server, **dadurch gekennzeichnet, dass** die Dateninteraktionsvorrichtung umfasst:
ein Erzeugungsmodul (101), das dazu konfiguriert ist, ein geparstes Tag durch Parsen einer Konfigurationsdatei einer Zielanwendung zu erzeugen, wobei die Zielanwendung eine mittels industrieller Konfigurationssoftware grafisch entwickelte Anwendung ist;
ein Erfassungsmodul (102), das dazu konfiguriert ist, Subskriptionsdaten eines Benutzergeräts (UE) aus einem Benutzerdatenverwaltungs(UDM)-Netzelement auf der Grundlage einer Internetprotokoll (IP)-Adresse des UE in dem geparsten Tag zu erfassen;
ein Bestimmungsmodul (103), das dazu konfiguriert ist, zu bestimmen, ob vorkonfigurierte erste Qualitätsanforderungsinformationen des UE mit zweiten Qualitätsanforderungsinformationen in den Subskriptionsdaten des UE übereinstimmen; und
ein Sendemodul (104), das dazu konfiguriert ist, eine Änderungsanforderung für die Subskriptionsdaten des UE an das UDM-Netzwerkelement für den Fall zu senden, dass die ersten Qualitätsanforderungsinformationen des UE nicht mit den zweiten Qualitätsanforderungsinformationen des UE übereinstimmen, sodass das UDM-Netzwerkelement die zweiten Qualitätsanforderungsinformationen des UE basierend auf den ersten Qualitätsanforderungsinformationen des UE ändert und eine Protokolldateneinheits (PDU)-Sitzung des UE unter Verwendung eines Sitzungsverwaltungsfunktion (SMF)-Netzwerkelements ändert, wodurch das UE eine Dateninteraktion für die Zielanwendung basierend auf den ersten Qualitätsanforderungsinformationen durchführt.

10. Dateninteraktionsvorrichtung nach Anspruch 9, **dadurch gekennzeichnet, dass**
das Erfassungsmodul (102) ferner dazu konfiguriert ist, eine Abfrageanforderung für Identifikationsinformationen des UE an das UDM-Netzwerkelement basierend auf der IP-Adresse des UE zu senden, so dass das UDM-Netzwerkelement nach Identifikationsinformationen des UE basierend auf der IP-Adresse des UE sucht, die von dem UDM gesendeten Identifikationsinformationen des UE in das geparste Tag zu schreiben; eine Abfrageanforderung für die Subskriptionsdaten des UE an das UDM-Netzwerkelement basierend auf den Identifikationsinformationen des UE in dem geparsten Tag zu senden; und die Subskriptionsdaten des UE von dem UDM-Netzwerkelement zu empfangen.

11. Dateninteraktionsvorrichtung nach Anspruch 9 oder 10, **dadurch gekennzeichnet, dass**
das Bestimmungsmodul (103) weiterhin dazu konfiguriert ist, zu bestimmen, ob Identifikationsinformationen eines ersten Netzwerkslices und Identifikationsinformationen einer ersten Qualitätsanforderung in den ersten Qualitätsanforderungsinformationen des UE jeweils mit Identifikationsinformationen eines zweiten Netzwerkslices und Identifikationsinformationen einer zweiten Qualitätsanforderung in den zweiten Qualitätsanforderungsinformationen des UE übereinstimmen; zu bestimmen, dass die ersten Qualitätsanforderungsinformationen des UE mit den zweiten Qualitätsanforderungsinformationen des UE übereinstimmen, wenn die Identifikationsinformationen des ersten Netzwerkslice mit den Identifikationsinformationen des zweiten Netzwerkslice übereinstimmen und die Identifikationsinformationen der ersten Qualitätsanforderung mit den Identifikationsinformationen der zweiten Qualitätsanforderung übereinstimmen; oder zu bestimmen, dass die ersten Qualitätsanforderungsinformationen des UE nicht mit den zweiten Qualitätsanforderungsinformationen des UE übereinstimmen, wenn die Identifikationsinformationen des ersten Netzwerkslice nicht mit den Identifikationsinformationen des zweiten Netzwerkslice ü bereinstimmen und/oder die Identifikationsinformationen der ersten Qualitätsanforderung nicht mit den Identifikationsinformationen der zweiten Qualitätsanforderung übereinstimmen.

12. Dateninteraktionsvorrichtung nach einem der Ansprüche 9 bis 11, **dadurch gekennzeichnet, dass** das UE ein Quell-UE umfasst;
das Erfassungsmodul (102) ferner dazu konfiguriert ist, Subskriptionsdaten des Quell-UE aus dem UDM-Netzwerkelement auf der Grundlage einer IP-Adresse des Quell-UE in dem geparsten Tag zu erfassen, um die Subskriptionsdaten des UE zu erfassen;
das Bestimmungsmodul (103) ferner dazu konfiguriert ist, zu bestimmen, ob erste Qualitätsanforderungsinformationen des Quell-UE mit zweiten Qualitätsanforderungsinformationen in den Subskriptionsdaten des Quell-UE übereinstimmen, zu bestimmen, ob die vorkonfigurierten ersten Qualitätsanforderungsinformationen des UE mit den zweiten Qualitätsanforderungsinformationen in den Subskriptionsdaten des UE übereinstimmen; und
das Sendemodul (104) ferner dazu konfiguriert ist, eine Änderungsanforderung für die Subskriptionsdaten des Quell-UE an das UDM-Netzwerkelement zu senden, wenn die ersten Qualitätsanforderungsinformationen des Quell-UE nicht mit den zweiten Qualitätsanforderungsinformationen des Quell-UE ü bereinstimmen, um die Änderungsanforderung für die Subskriptionsdaten des UE an das UDM-Netzwerkelement zu senden.

13. Dateninteraktionsvorrichtung nach einem der Ansprüche 9 bis 11, **dadurch gekennzeichnet, dass** das UE ein Ziel-UE umfasst;
das Erfassungsmodul (102) ferner dazu konfiguriert ist, Subskriptionsdaten des Ziel-UE aus dem UDM-Netzwerkelement auf der Grundlage einer IP-Adresse des Ziel-UE in dem geparsten Tag zu erfassen, um die Subskriptionsdaten des UE zu erfassen;
das Bestimmungsmodul (103) ferner dazu konfiguriert ist, zu bestimmen, ob erste Qualitätsanforderungsinformationen des Ziel-UE mit zweiten Qualitätsanforderungsinformationen in den Subskriptionsdaten des Ziel-UE übereinstimmen, zu bestimmen, ob die vorkonfigurierten ersten Qualitätsanforderungsinformationen des UE mit den zweiten Qualitätsanforderungsinformationen in den Subskriptionsdaten des UE übereinstimmen; und
das Sendemodul (104) ferner dazu konfiguriert ist, eine Änderungsanforderung für die Subskriptionsdaten des Ziel-UE an das UDM-Netzwerkelement zu senden, wenn die ersten Qualitätsanforderungsinformationen des Ziel-UE nicht mit den zweiten Qualitätsanforderungsinformationen des Ziel-UE ü bereinstimmen, um die Änderungsanforderung für die Subskriptionsdaten des UE an das UDM-Netzwerkelement zu senden.

14. Dateninteraktionsvorrichtung für eine speicherprogrammierbare Steuerung, anwendbar auf ein Benutzerdatenverwaltung (UDM)-Netzelement, **dadurch gekennzeichnet, dass** die Dateninteraktionsvorrichtung umfasst:
ein Empfangsmodul (201), das dazu konfiguriert ist, eine Änderungsanforderung für Subskriptionsdaten eines Benutzergeräts (UE) von einem Server zu empfangen, wobei die Änderungsanforderung vom Server in einem Fall gesendet wird, in dem der Server bestimmt, dass vorkonfigurierte erste Qualitätsanforderungsinformationen nicht mit zweiten Qualitätsanforderungsinformationen in den Subskriptionsdaten des UE übereinstimmen, und die Subskriptionsdaten des UE von einem Server aus einem UDM-Netzwerkelement basierend auf einer Internetprotokoll (IP)-Adresse des UE in einem geparsten Tag erworben werden, wobei der geparste Tag vom Server durch Parsen einer Konfigurationsdatei einer Zielanwendung erzeugt wird, wobei die Zielanwendung eine mittels industrieller Konfigurationssoftware grafisch entwickelte Anwendung ist;
ein Änderungsmodul (202), das dazu konfiguriert ist, die zweiten Qualitätsanforderungsinformationen in den Subskriptionsdaten des UE basierend auf den ersten Qualitätsanforderungsinformationen des UE, die in der Änderungsanforderung mitgeführt werden, zu ändern, und eine Protokollsitzungseinheit (PDU)-Sitzung des UE mithilfe eines Sitzungsverwaltungsfunktion (SMF)-Netzwerkelements zu ändern, so dass das UE Dateninteraktion für die Zielanwendung basierend auf den ersten Qualitätsanforderungsinformationen durchführt.

15. Dateninteraktionsvorrichtung nach Anspruch 14, **dadurch gekennzeichnet, dass**
das Empfangsmodul (201) ferner dazu konfiguriert ist, eine Abfrageanforderung für Identifikationsinformationen des UE zu empfangen, die vom Server basierend auf der IP-Adresse des UE gesendet wird;
das Änderungsmodul (202) ferner dazu konfiguriert ist, basierend auf der IP-Adresse des UE nach Identifikationsinformationen des UE zu suchen; und
das Empfangsmodul (201) ferner dazu konfiguriert ist, die Identifikationsinformationen des UE an den Server zu senden, sodass der Server die Identifikationsinformationen des UE in das geparste Tag schreibt; eine Abfrageanforderung für die Subskriptionsdaten des UE zu empfangen, die von dem Server basierend auf den Identifikationsinformationen des UE in dem geparsten Tag gesendet wird; und die Subskriptionsdaten des UE an den Server zu senden.

## Revendications

1. Procédé d'interaction de données pour un contrôleur logique programmable, **caractérisé par** comprenant :
générer (S101) une étiquette analysée en analysant un fichier de configuration d'une application cible, l'application cible étant une application graphiquement développée à l'aide d'un logiciel de configuration industrielle ;
acquérir (S102) des données d'abonnement d'un équipement utilisateur, UE, depuis un élément de réseau de gestion de données utilisateur, UDM, sur la base d'une adresse de protocole Internet, IP, de l'UE dans l'étiquette analysée ;
déterminer (S103) si une première information d'exigence de qualité préconfigurée de l'UE est cohérente avec une seconde information d'exigence de qualité dans les données d'abonnement de l'UE ; et
envoyer (S104) une requête de modification des données d'abonnement de l'UE vers l'élément de réseau UDM dans le cas où la première information d'exigence de qualité de l'UE est incohérente avec la seconde information d'exigence de qualité de l'UE, de sorte que l'élément de réseau UDM modifie la seconde information d'exigence de qualité de l'UE sur la base de la première information d'exigence de qualité de l'UE, et modifie une session d'unité de données de protocole, PDU, de l'UE en utilisant un élément de réseau de fonction de gestion de session, SMF, de sorte que l'UE effectue une interaction de données pour l'application cible sur la base de la première information d'exigence de qualité.

2. Procédé selon la revendication 1, **caractérisé en ce que** l'acquisition des données d'abonnement de l'UE depuis l'élément de réseau UDM sur la base de l'adresse IP de l'UE dans l'étiquette analysée comprend :
envoyer (S201) une requête de consultation d'une information d'identification de l'UE vers l'élément de réseau UDM sur la base de l'adresse IP de l'UE, de sorte que l'élément de réseau UDM recherche une information d'identification de l'UE sur la base de l'adresse IP de l'UE ;
écrire (S202) l'information d'identification de l'UE envoyée par l'UDM dans l'étiquette analysée ;
envoyer (S203) une requête de consultation des données d'abonnement de l'UE vers l'élément de réseau UDM sur la base de l'information d'identification de l'UE dans l'étiquette analysée ; et
recevoir (S204) les données d'abonnement de l'UE depuis l'élément de réseau UDM.

3. Procédé selon la revendication 1 ou 2, **caractérisé en ce que** la détermination si la première information d'exigence de qualité préconfigurée de l'UE est cohérente avec la seconde information d'exigence de qualité dans les données d'abonnement de l'UE comprend :
déterminer si une information d'identification d'une première tranche de réseau et une information d'identification d'une première exigence de qualité dans la première information d'exigence de qualité de l'UE sont respectivement cohérentes avec une information d'identification d'une seconde tranche de réseau et avec une information d'identification d'une seconde exigence de qualité dans la seconde information d'exigence de qualité de l'UE ;
déterminer que la première information d'exigence de qualité de l'UE est cohérente avec la seconde information d'exigence de qualité de l'UE dans le cas où l'information d'identification de la première tranche de réseau est cohérente avec l'information d'identification de la seconde tranche de réseau, et l'information d'identification de la première exigence de qualité est cohérente avec l'information d'identification de la seconde exigence de qualité ; ou
déterminer que la première information d'exigence de qualité de l'UE est incohérente avec la seconde information d'exigence de qualité de l'UE dans le cas où l'information d'identification de la première tranche de réseau est incohérente avec l'information d'identification de la seconde tranche de réseau et/ou que l'information d'identification de la première exigence de qualité est incohérente avec l'information d'identification de la seconde exigence de qualité.

4. Procédé selon l'une quelconque des revendications 1 à 3, **caractérisé en ce que** l'UE comprend un UE source ; et l'acquisition des données d'abonnement de l'UE depuis l'élément de réseau UDM sur la base de l'adresse IP de l'UE dans l'étiquette analysée comprend :
acquérir (S301) des données d'abonnement de l'UE source depuis l'élément de réseau UDM sur la base d'une adresse IP de l'UE source dans l'étiquette analysée ;
dans lequel la détermination si la première information d'exigence de qualité préconfigurée de l'UE est cohérente avec la seconde information d'exigence de qualité dans les données d'abonnement de l'UE comprend :
déterminer (S302) si une première information d'exigence de qualité de l'UE source est cohérente avec une seconde information d'exigence de qualité dans les données d'abonnement de l'UE source ; et
dans lequel l'envoi de la requête de modification des données d'abonnement de l'UE vers l'élément de réseau UDM dans le cas où la première information d'exigence de qualité de l'UE est incohérente avec la seconde information d'exigence de qualité de l'UE comprend :
envoyer (S303) une requête de modification des données d'abonnement de l'UE source vers l'élément de réseau UDM dans le cas où la première information d'exigence de qualité de l'UE source est incohérente avec la seconde information d'exigence de qualité de l'UE source.

5. Procédé selon l'une quelconque des revendications 1 à 3, **caractérisé en ce que** l'UE comprend un UE de destination ; et l'acquisition des données d'abonnement de l'UE depuis l'élément de réseau UDM sur la base de l'adresse IP de l'UE dans l'étiquette analysée comprend :
acquérir (S401) des données d'abonnement de l'UE de destination depuis l'élément de réseau UDM sur la base d'une adresse IP de l'UE de destination dans l'étiquette analysée ;
dans lequel la détermination si la première information d'exigence de qualité préconfigurée de l'UE est cohérente avec la seconde information d'exigence de qualité dans les données d'abonnement de l'UE comprend :
déterminer (S402) si une première information d'exigence de qualité de l'UE de destination est cohérente avec une seconde information d'exigence de qualité dans les données d'abonnement de l'UE de destination ; et
dans lequel l'envoi de la requête de modification des données d'abonnement de l'UE vers l'élément de réseau UDM dans le cas où la première information d'exigence de qualité de l'UE est incohérente avec la seconde information d'exigence de qualité de l'UE comprend :
envoyer (S403) une requête de modification des données d'abonnement de l'UE de destination vers l'élément de réseau UDM dans le cas où la première information d'exigence de qualité de l'UE de destination est incohérente avec la seconde information d'exigence de qualité de l'UE de destination.

6. Procédé selon l'une quelconque des revendications 1 à 5, **caractérisé en ce qu'**avant la détermination si la première information d'exigence de qualité préconfigurée de l'UE est cohérente avec la seconde information d'exigence de qualité dans les données d'abonnement de l'UE, le procédé comprend en outre :
déterminer la première information d'exigence de qualité de l'UE à partir de l'étiquette analysée ; ou
récupérer la première information d'exigence de qualité de l'UE à partir d'une base de données prédéterminée sur la base d'un champ correspondant à un canal d'informations dans l'étiquette analysée.

7. Procédé d'interaction de données pour un contrôleur logique programmable, applicable à un élément de réseau de gestion de données utilisateur, UDM, **caractérisé en ce que** le procédé d'interaction de données comprend :
recevoir (S501) une requête de modification des données d'abonnement d'un équipement utilisateur, UE, depuis un serveur, la requête de modification étant envoyée par le serveur dans le cas où le serveur détermine qu'une première information d'exigence de qualité préconfigurée est incohérente avec une seconde information d'exigence de qualité dans les données d'abonnement de l'UE, et les données d'abonnement de l'UE étant acquises par le serveur depuis l'élément de réseau UDM sur la base d'une adresse de protocole Internet, IP, de l'UE dans une étiquette analysée, l'étiquette analysée étant générée par le serveur en analysant un fichier de configuration d'une application cible, et l'application cible étant une application graphiquement développée à l'aide d'un logiciel de configuration industrielle ;
modifier (S502) la seconde information d'exigence de qualité dans les données d'abonnement de l'UE sur la base de la première information d'exigence de qualité de l'UE véhiculée dans la requête de modification ; et
modifier (S503) une session d'unité de données de protocole, PDU, de l'UE en utilisant un élément de réseau de fonction de gestion de session, SMF, de sorte que l'UE effectue une interaction de données pour l'application cible sur la base de la première information d'exigence de qualité.

8. Procédé d'interaction de données selon la revendication 7, **caractérisé en ce qu'**il comprend en outre :
recevoir une requête de consultation d'une information d'identification de l'UE envoyée par, sur la base de l'adresse IP de l'UE, le serveur ;
rechercher une information d'identification de l'UE sur la base de l'adresse IP de l'UE ;
envoyer l'information d'identification de l'UE vers le serveur afin d'écrire l'information d'identification de l'UE dans l'étiquette analysée ;
recevoir une requête de consultation des données d'abonnement de l'UE envoyée par, sur la base de l'information d'identification de l'UE dans l'étiquette analysée, le serveur ; et
envoyer les données d'abonnement de l'UE vers le serveur.

9. Appareil d'interaction de données pour un contrôleur logique programmable, applicable à un serveur, **caractérisé en ce que** l'appareil d'interaction de données comprend :
un module de génération (101), configuré pour générer une étiquette analysée en analysant un fichier de configuration d'une application cible, l'application cible étant une application graphiquement développée à l'aide d'un logiciel de configuration industrielle ;
un module d'acquisition (102), configuré pour acquérir des données d'abonnement d'un équipement utilisateur, UE, depuis un élément de réseau de gestion de données utilisateur, UDM, sur la base d'une adresse de protocole Internet, IP, de l'UE dans l'étiquette analysée ;
un module de détermination (103), configuré pour déterminer si une première information d'exigence de qualité préconfigurée de l'UE est cohérente avec une seconde information d'exigence de qualité dans les données d'abonnement de l'UE ; et
un module d'envoi (104), configuré pour envoyer une requête de modification des données d'abonnement de l'UE vers l'élément de réseau UDM dans le cas où la première information d'exigence de qualité de l'UE est incohérente avec la seconde information d'exigence de qualité de l'UE, de sorte que l'élément de réseau UDM modifie la seconde information d'exigence de qualité de l'UE sur la base de la première information d'exigence de qualité de l'UE, et modifie une session d'unité de données de protocole, PDU, de l'UE en utilisant un élément de réseau de fonction de gestion de session, SMF, de sorte que l'UE effectue une interaction de données pour l'application cible sur la base de la première information d'exigence de qualité.

10. Appareil d'interaction de données selon la revendication 9, **caractérisé en ce que**,
le module d'acquisition (102) est en outre configuré pour envoyer une requête de consultation d'une information d'identification de l'UE vers l'élément de réseau UDM sur la base de l'adresse IP de l'UE, de sorte que l'élément de réseau UDM recherche une information d'identification de l'UE sur la base de l'adresse IP de l'UE ; écrire l'information d'identification de l'UE envoyée par l'UDM dans l'étiquette analysée ; envoyer une requête de consultation des données d'abonnement de l'UE vers l'élément de réseau UDM sur la base de l'information d'identification de l'UE dans l'étiquette analysée ; et recevoir les données d'abonnement de l'UE depuis l'élément de réseau UDM.

11. Appareil d'interaction de données selon la revendication 9 ou 10, **caractérisé en ce que**,
le module de détermination (103) est en outre configuré pour déterminer si une information d'identification d'une première tranche de réseau et une information d'identification d'une première exigence de qualité dans la première information d'exigence de qualité de l'UE sont respectivement cohérentes avec une information d'identification d'une seconde tranche de réseau et avec une information d'identification d'une seconde exigence de qualité dans la seconde information d'exigence de qualité de l'UE ; déterminer que la première information d'exigence de qualité de l'UE est cohérente avec la seconde information d'exigence de qualité de l'UE dans le cas où l'information d'identification de la première tranche de réseau est cohérente avec l'information d'identification de la seconde tranche de réseau, et l'information d'identification de la première exigence de qualité est cohérente avec l'information d'identification de la seconde exigence de qualité ; ou déterminer que la première information d'exigence de qualité de l'UE est incohérente avec la seconde information d'exigence de qualité de l'UE dans le cas où l'information d'identification de la première tranche de réseau est incohérente avec l'information d'identification de la seconde tranche de réseau et/ou que l'information d'identification de la première exigence de qualité est incohérente avec l'information d'identification de la seconde exigence de qualité.

12. Appareil d'interaction de données selon l'une quelconque des revendications 9 à 11, **caractérisé en ce que** l'UE comprend un UE source ;
le module d'acquisition (102) est en outre configuré pour acquérir des données d'abonnement de l'UE source depuis l'élément de réseau UDM sur la base d'une adresse IP de l'UE source dans l'étiquette analysée, afin d'acquérir les données d'abonnement de l'UE ;
le module de détermination (103) est en outre configuré pour déterminer si une première information d'exigence de qualité de l'UE source est cohérente avec une seconde information d'exigence de qualité dans les données d'abonnement de l'UE source, afin de déterminer si la première information d'exigence de qualité préconfigurée de l'UE est cohérente avec la seconde information d'exigence de qualité dans les données d'abonnement de l'UE ; et
le module d'envoi (104) est en outre configuré pour envoyer une requête de modification des données d'abonnement de l'UE source vers l'élément de réseau UDM si la première information d'exigence de qualité de l'UE source est incohérente avec la seconde information d'exigence de qualité de l'UE source, afin d'envoyer la requête de modification des données d'abonnement de l'UE vers l'élément de réseau UDM.

13. Appareil d'interaction de données selon l'une quelconque des revendications 9 à 11, **caractérisé en ce que** l'UE comprend un UE de destination ;
le module d'acquisition (102) est en outre configuré pour acquérir des données d'abonnement de l'UE de destination depuis l'élément de réseau UDM sur la base d'une adresse IP de l'UE de destination dans l'étiquette analysée, afin d'acquérir des données d'abonnement de l'UE ;
le module de détermination (103) est en outre configuré pour déterminer si une première information d'exigence de qualité de l'UE de destination est cohérente avec une seconde information d'exigence de qualité dans les données d'abonnement de l'UE de destination, afin de déterminer si la première information d'exigence de qualité préconfigurée de l'UE est cohérente avec la seconde information d'exigence de qualité dans les données d'abonnement de l'UE ; et
le module d'envoi (104) est en outre configuré pour envoyer une requête de modification des données d'abonnement de l'UE de destination vers l'élément de réseau UDM dans le cas où la première information d'exigence de qualité de l'UE de destination est incohérente avec la seconde information d'exigence de qualité de l'UE de destination, afin d'envoyer la requête de modification des données d'abonnement de l'UE vers l'élément de réseau UDM.

14. Appareil d'interaction de données pour un contrôleur logique programmable, applicable à un élément de réseau de gestion de données utilisateur, UDM, **caractérisé en ce que** l'appareil d'interaction de données comprend :
un module de réception (201), configuré pour recevoir une requête de modification des données d'abonnement d'un équipement utilisateur, UE, depuis un serveur, la requête de modification étant envoyée par le serveur dans le cas où le serveur détermine qu'une première information d'exigence de qualité préconfigurée est incohérente avec une seconde information d'exigence de qualité dans les données d'abonnement de l'UE, et les données d'abonnement de l'UE étant acquises par le serveur depuis l'élément de réseau UDM sur la base d'une adresse de protocole Internet, IP, de l'UE dans une étiquette analysée, l'étiquette analysée étant générée par le serveur en analysant un fichier de configuration d'une application cible, et l'application cible étant une application graphiquement développée à l'aide d'un logiciel de configuration industrielle ;
un module de modification (202), configuré pour modifier la seconde information d'exigence de qualité dans les données d'abonnement de l'UE sur la base de la première information d'exigence de qualité de l'UE véhiculée dans la requête de modification, et modifier une session d'unité de données de protocole, PDU, de l'UE en utilisant un élément de réseau de fonction de gestion de session, SMF, de sorte que l'UE effectue une interaction de données pour l'application cible sur la base de la première information d'exigence de qualité.

15. Appareil d'interaction de données selon la revendication 14, **caractérisé en ce que**,
le module de réception (201) est en outre configuré pour recevoir une requête de consultation d'une information d'identification de l'UE envoyée par, sur la base de l'adresse IP de l'UE, le serveur ;
le module de modification (202) est en outre configuré pour rechercher une information d'identification de l'UE sur la base de l'adresse IP de l'UE ; et
le module de réception (201) est en outre configuré pour envoyer l'information d'identification de l'UE vers le serveur afin d'écrire l'information d'identification de l'UE dans l'étiquette analysée ; recevoir une requête de consultation des données d'abonnement de l'UE envoyée par, sur la base de l'information d'identification de l'UE dans l'étiquette analysée, le serveur ; et envoyer les données d'abonnement de l'UE vers le serveur.
